(19) **Europäisches Patentamt**
**European Patent Office**
**Office européen des brevets**

(11) **EP 3 832 923 A1**

(12) **EUROPEAN PATENT APPLICATION**
published in accordance with Art. 153(4) EPC

(43) Date of publication:
**09.06.2021 Bulletin 2021/23**

(51) Int Cl.:
*H04L 1/06* (2006.01)　　　*H04L 27/26* (2006.01)

(21) Application number: **18928292.4**

(86) International application number:
**PCT/JP2018/029305**

(22) Date of filing: **03.08.2018**

(87) International publication number:
**WO 2020/026450 (06.02.2020 Gazette 2020/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME
KH MA MD TN**

(71) Applicant: **NTT DoCoMo, Inc.
Tokyo 100-6150 (JP)**

(72) Inventors:
• **OKAMURA, Masaya
Tokyo 100-6150 (JP)**

• **TAKEDA, Kazuaki
Tokyo 100-6150 (JP)**
• **HARADA, Hiroki
Tokyo 100-6150 (JP)**
• **MATSUMURA, Yuki
Tokyo 100-6150 (JP)**

(74) Representative: **Hoffmann Eitle
Patent- und Rechtsanwälte PartmbB
Arabellastraße 30
81925 München (DE)**

(54) **USER TERMINAL**

(57)　A user terminal according to an aspect of the present disclosure includes a receiving section that receives information regarding transmit diversity of an uplink channel, and a control section that controls a maximum interval of a pair of subcarriers to which the uplink channel and a demodulation reference signal of the uplink channel are mapped in a case where the transmit diversity using a single carrier space-frequency block code (SC-SFBC) is configured based on the information. By this means, it is possible to appropriately control space-frequency transmit diversity (SFTD) in uplink communication.

FIG. 4

EP 3 832 923 A1

**Description**

Technical Field

The present disclosure relates to a user terminal in a next-generation mobile communication system.

Background Art

In the UMTS (Universal Mobile Telecommunications System) network, the specifications of Long Term Evolution (LTE) have been drafted for the purpose of further increasing high speed data rates, providing lower delays and so on (see Non-Patent Literature 1). In addition, the specifications of LTE-A (LTE Advanced, LTE Rel. 10, 11, 12, and 13) have been drafted for the purpose of further increasing the capacity and enhancement of LTE (LTE Rel. 8 and 9).
Successor systems of LTE are also under study (also referred to as, for example, FRA (Future Radio Access), 5G (5th generation mobile communication system), 5G+ (plus), NR (New Radio), NX (New radio access), FX (Future generation radio access), LTE Rel. 14 LTE Rel. 15 or later versions and so on).
Existing LTE systems (for example, LTE Rel. 10) support transmit diversity of an uplink control channel (for example, a physical uplink control channel (PUCCH)). For example, existing LTE systems support spatial orthogonal-resource transmit diversity (SORTD) in which a plurality of PUCCH resources is respectively used for transmission at different antenna ports.

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

Summary of Invention

Technical Problem

In transmit diversity, it is not always necessary to increase the number of receiving antennas on a reception side, and thus, received quality, area coverage, and the like, are expected to be improved, and increase of a circuit scale and power consumption on the reception side is expected to be prevented. It is therefore desired to introduce transmit diversity for uplink (UL) communication in a future radio communication system (for example, Rel. 15 and thereafter, hereinafter, referred to as NR).
For example, in the NR, study of space-frequency transmit diversity (SFTD) which is one type of a multi-antenna transmission method (space-frequency coding) of mapping information symbols on a frequency domain and on a spatial domain (transmitting antennas), is underway. The SFTD includes, for example, a space-frequency block code (SFBC), a single carrier SFBC (SC-SFBC), and the like.
However, in the NR, there is a possibility that a gain of the transmit diversity cannot be appropriately obtained as a result of failing to appropriately control space-frequency transmit diversity (SFTD) in uplink communication.
One of objects of the present disclosure is therefore to provide a user terminal which is capable of appropriately controlling space-frequency transmit diversity (SFTD) in uplink communication.

Solution to Problem

A user terminal according to an aspect of the present disclosure includes a receiving section that receives information regarding transmit diversity of an uplink channel, and a control section that controls, when the transmit diversity using a single carrier space-frequency block code (SC-SFBC) is configured based on the information, a maximum interval of a pair of subcarriers to which the uplink channel and a demodulation reference signal of the uplink channel are mapped.

Advantageous Effects of Invention

According to one aspect of the present disclosure, it is possible to appropriately control space-frequency transmit diversity (SFTD) in uplink communication.

Brief Description of Drawings

Fig. 1 is a view illustrating an example of transmission processing using an SC-SFBC.

Fig. 2 is a view illustrating an example of subcarrier mapping in the SC-SFBC.

Fig. 3 is a view illustrating an example of mapping of PUSCHs and DMRSs of the PUSCHs.

Fig. 4 is a view illustrating an example of first maximum interval control in a case where the number of repetitions K of a PUSCH is two according to a second aspect.

Fig. 5 is a view illustrating an example of first maximum interval control in a case where the number of repetitions K of a PUSCH is four according to a second aspect.

Fig. 6 is a view illustrating an example of first maximum interval control in a case where the number of repetitions K of a PUSCH is eight according to a second aspect.

Fig. 7 is a view illustrating an example of a table for first maximum interval control according to the second aspect.

Fig. 8 is a view illustrating an example of control of power per RE according to the second aspect.

Fig. 9 is a view illustrating an example of a table for second maximum interval control according to the second aspect.

Fig. 10 is a view illustrating an example of a table for maximum interval control in accordance with the number of PRBs according to the second aspect.

Fig. 11 is a view illustrating an example of maximum interval control of a subcarrier pair to which DMRSs are mapped in a case where $N_{PRB} = 1$ according to a third aspect.

Fig. 12 is a view illustrating an example of maximum interval control of a subcarrier pair to which DMRSs are mapped in a case where $N_{PRB} \geq 2$ according to a third aspect.

Fig. 13 is a view illustrating an example of a table for maximum interval control in accordance with the number of PRBs according to the third aspect.

Fig. 14 is a view illustrating a modified example of the maximum interval control of the subcarrier pair to which the DMRSs are mapped according to the third aspect.

Fig. 15A and Fig. 15B are views illustrating an example of control of DMRS mapping positions in a case where CP-OFDM and an SFBC are configured according to the third aspect.

Fig. 16A and Fig. 16B are views illustrating another example of control of the DMRS mapping positions in a case where the CP-OFDM and the SFBC are configured according to the third aspect.

Fig. 17 is a view illustrating an example of a schematic configuration of a radio communication system according to the present embodiment.

Fig. 18 is a view illustrating an example of an entire configuration of a base station according to the present embodiment.

Fig. 19 is a view illustrating an example of a functional configuration of the base station according to the present embodiment.

Fig. 20 is a diagram illustrating an exemplary overall structure of a user terminal according to the present embodiment.

Fig. 21 is a diagram illustrating an exemplary functional structure of a user terminal according to the present embodiment.

Fig. 22 is a diagram illustrating an exemplary hardware structure of a base station and a user terminal according to present embodiment.

Description of Embodiments

In a radio communication system, a fading phenomenon in which communication quality fluctuates due to influence of a multipath is problematic. Diversity is a technique of compensating for fading. Among the diversities, a diversity which is implemented by a transmission side transmitting signals using a plurality of antennas is referred to as transmit diversity. In transmit diversity, it is not always necessary to increase the number of receiving antennas on a reception side, and thus, received quality, area coverage, and the like, are expected to be improved, and increase of a circuit scale and power consumption on the reception side is expected to be prevented.

For example, LTE-A (Rel-10) specifies spatial orthogonal-resource transmit diversity (SORTD) in which a plurality of PUCCH resources is respectively used for transmission at different antenna ports.

Also, in NR, utilization of transmit diversity is studied. Candidates for transmit diversity to be applied to a PUSCH can include a space-frequency block code (SFBC), a single carrier SFBC (SC-SFBC), a space-time block code (STBC), a spatial stream STBC (SS-STBC), antenna switching, cyclic delay diversity (CDD), and the like.

For example, the SFBC, the SC-SFBC, and the like, are one type of a multi-antenna transmission method (space-frequency coding) of mapping information symbols on a frequency domain and on a spatial domain (transmitting antennas). Space-frequency coding of two antennas is also referred to as space-frequency transmit diversity (SFTD), or the like.

In the SFTD, a pair of modulation symbols (symbol pair) in a frequency domain is orthogonalized through Alamouti coding, mapped to subcarriers of different transmitting antennas (for example, two transmitting antennas) and transmitted. For example, in the SFBC, a symbol pair in the SFTD may be two modulation symbols which are neighboring in the frequency domain. Note that the symbol pair is mapped to neighboring subcarriers, and thus, may be called a subcarrier pair, or the like.

Meanwhile, in the SC-SFBC, a symbol pair in the SFTD is not limited to two neighboring modulation symbols and may be two modulation symbols which are separate from each other by a given interval (one or more modulation symbols). Further, the symbol pair is mapped to subcarriers which are separate from each other by a given interval (one or more subcarriers), and thus, may be called a subcarrier pair, or the like.

The SC-SFBC is useful for maintaining an effect of preventing increase of a peak to average power ratio (PAPR) by discrete Fourier transform-spread-orthogonal frequency division multiplexing (DFT-s-OFDM). Thus, the SC-SFBC is also called a PAPR preserving SFBC, or the like.

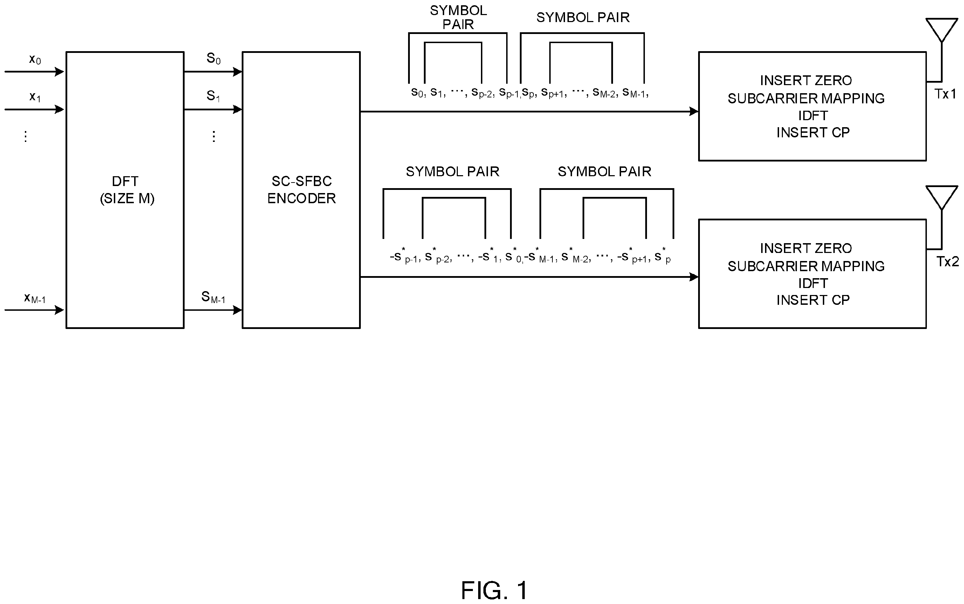

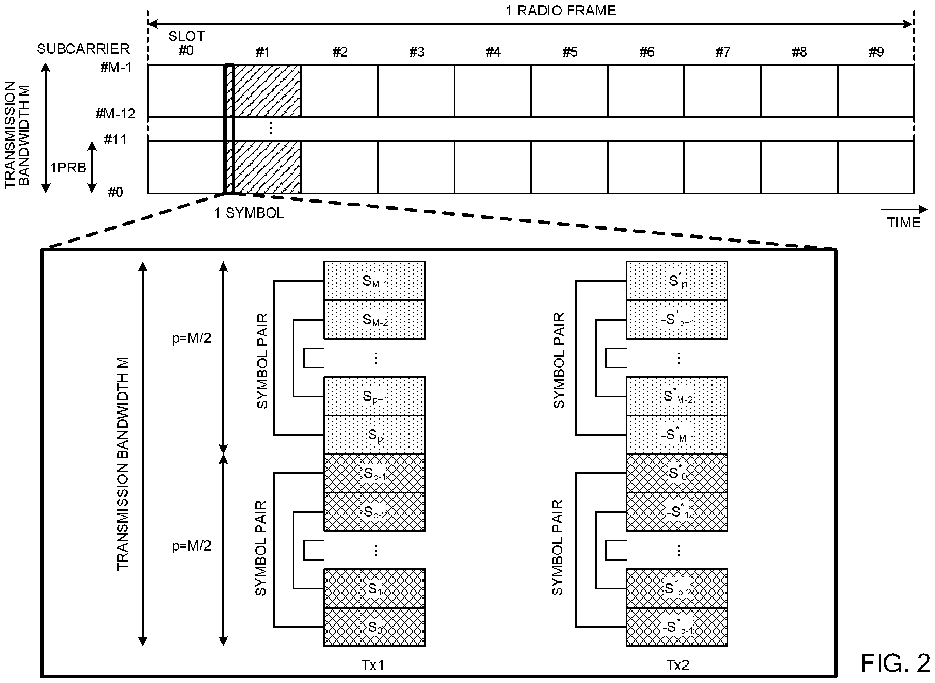

An example of the SC-SFBC will be described with reference to Fig. 1 and Fig. 2. Fig. 1 is a view illustrating an example of transmission processing using the SC-SFBC. As illustrated in Fig. 1, in the SC-SFBC, transmission processing using the DFT-s-OFDM may be performed. For example, in Fig. 1, information sequences $x_0$ to $x_{M-1}$ after coding and modulation are input to discrete Fourier transform (DFT) of M points so that the time-domain information sequences are converted into frequency-domain information sequences. The frequency-domain modulation symbols $S_0$ to $S_{M-1}$ output from the DFT are input to an SC-SFBC encoder.

The SC-SFBC encoder pairs the modulation symbols $S_0$ to $S_{M-1}$ at given intervals. The SC-SFBC encoder may take a complex conjugate of the paired two modulation symbols and may invert polarity of one of the modulation symbols. Note that "*" in Fig. 1 indicates a complex conjugate.

As illustrated in Fig. 1, the SC-SFBC encoder outputs original modulation symbols $S_0$, $S_1$, ..., $S_{p-2}$, $S_{p-1}$, $S_p$, $S_{p+1}$, **...,** $S_{M-2}$, $S_{M-1}$ and symbols $-S^*_{p-1}$, $S^*_{p-2}$, **...,** $-S^*_1$, $S^*_0$, $S_{M-1}$, $S^*_{M-2}$, ..., $-S^*_{p+1}$, $S^*p$ which are obtained by encoding and changing the order.

The original modulation symbols $S_0$, $S_1$, ..., $S_{p-2}$, $S_{p-1}$, $S_p$, $S_{p+1}$, ..., $S_{M-2}$, $S_{M-1}$ are respectively mapped to M subcarriers of a first transmitting antenna (Tx1) without the order being changed (see Tx1 in Fig. 2). On the other hand, the symbols $-S^*_{p-1}$, $S^*_{p-2}$, ..., $-S^*_1$ $S^*_0$, $-S^*_{M-1}$, $S^*_{M-2}$, ..., $-S^*_{p+1}$, $S^*p$ which are obtained by the SC-SFBC encoder encoding the symbols and changing the order are respectively mapped to M subcarriers of a second transmitting antenna (Tx2) (see Tx2 in Fig. 2).

The symbols (symbol pair) paired in Fig. 1 are mapped to a pair of subcarriers (subcarrier pair) at given intervals as illustrated in Fig. 2. For example, while it is assumed in Fig. 2 that a maximum interval p of the symbol pair is a transmission bandwidth M/2, the maximum interval p is not limited to this.

Signals that are respectively mapped to subcarriers in the first and the second transmitting antennas are input to an inverse discrete Fourier transform (IDFT) of N points, and frequency-domain signals are converted into time-domain signals.

Here, N > M, and zero is inserted into IDFT which is not used. By this means, output of the IDFT becomes a signal which has small instantaneous power fluctuation and whose bandwidth depends on M. The output from the IDFT is parallel/serial (P/S) converted, and a cyclic prefix (CP) is added. In this manner, in the DFT-s-OFDM, a signal having characteristics of a single carrier is generated and transmitted in one symbol.

As illustrated in Fig. 1 and Fig. 2, in a case where DFT-s-OFDM is used, the maximum interval p of the subcarrier pair is inversely proportional to the PAPR. Meanwhile, as the maximum interval P of the subcarrier pair becomes greater, influence of frequency selectivity becomes greater. As a result, orthogonality between symbols within the pair is more likely to be lost, which may lead to decrease in a diversity gain.

By the way, in the NR, it is studied to perform transmission while repeating (with repetition of) an uplink channel (for example, a PUSCH or a PUCCH) in one or more slots. For example, repetitive transmission over a plurality of slots is also called multi-slot transmission, or the like.

Further, in the NR, it is studied to configure the number of times of repetition of an uplink channel (the number of repetitions) through higher layer signaling. The number of repetitions K may be restated as an aggregation factor, or the like. The number of repetitions K may be indicated by a higher layer parameter (for example, aggregationFactorUL). For example, the number of repetitions K may be 2, 4, 8, or the like.

Note that the configuration through higher layer signaling may be notification of configuration information from a base station (which is also called a base station (BS), a transmission/reception point (TRP), eNodeB (eNB), NR NodeB (gNB), or the like) to a user terminal (which is also called User Equipment (UE), a terminal, a mobile station (MS), or the like).

Further, the higher layer signaling may be, for example, at least one of the following:

- radio resource control (RRC) signaling
- medium access control (MAC) signaling (for example, a MAC control element (CE) and a MAC protocol data unit (PDU))
- information (for example, master information block (MIB)) transmitted using a broadcast channel (for example, physical broadcast channel (PBCH))
- system information (for example, a system information block (SIB), remaining minimum system information (RMSI) and other system information (OSI))

For example, while repetitive transmission of an uplink channel is performed with a plurality of consecutive slots, at least part of the repetitive transmission does not have to be performed with a plurality of inconsecutive slots.

Note that in repetitive transmission of the uplink channel, each repetitive redundancy version (RV) may be controlled based on a given rule. For example, the user terminal may determine an RV to be applied to the uplink channel (for example, a PUSCH) which is to be repeated based on a given field value (for example, an RV field value) within downlink control information (DCI) and what number of times the repetition is.

According to the repetitive transmission described above, the base station can improve received quality of the uplink channel through soft combining, or the like, of repeated uplink channels.

As described above, in the NR, improvement in received quality can be expected by repetitive transmission of an uplink channel. The present inventors therefore have conceived of appropriately obtaining a gain of transmit diversity by controlling a maximum interval of the subcarrier pair to which the symbol pair of the SC-SFBC is mapped based on whether or not repetitive transmission is configured for the uplink channel. Further, the present inventors have studied a method for appropriately controlling uplink communication using SFTD including an SC-SFBC and an SFBC and have achieved the present invention.

The present embodiment will be described in detail below. While, in the present embodiment which will be described below, a PUSCH will be described as an example of the uplink channel, the uplink channel is not limited to this. The present embodiment can be applied while the "PUSCH" is replaced with other uplink channels (for example, a PUCCH, or the like). In a similar manner, while it is assumed in the following description that the DMRS is a DMRS of the PUSCH, the present embodiment can be also applied to DMRSs of other uplink channels or other reference signals as appropriate.

(First Aspect)

In a first aspect, configuration of transmit diversity for a user terminal will be described. The user terminal may control the configuration of the transmit diversity based on information (explicit information) which explicitly gives an instruction as to the configuration of the transmit diversity. Alternatively, the user terminal may configure the transmit diversity based on implicit information without explicit information.

Specifically, the user terminal receives at least one of information regarding the transmit diversity of the PUSCH (transmit diversity information) or information regarding repetitive transmission of the PUSCH (repetition information) from the base station. For example, the user terminal may receive the transmit diversity information and the repetition information through at least one of higher layer signaling or physical layer signaling (for example, DCI) .

The transmit diversity information may include, for example, at least one of information (TD type information) indicating a type (such as, for example, an SC-SFBC or an SFBC) of transmit diversity (TD) to be applied to the PUSCH or information (TD application information) indicating whether or not to apply transmit diversity to the PUSCH.

The repetition information may include, for example, at least one of information (which is also referred to as information on the number of repetitions, aggregationfactor-UL, pusch-AggregationFactor, or the like) indicating the number of repetitions of the PUSCH or information (repetition application information) indicating whether or not to apply transmit diversity to the PUSCH.

The user terminal may determine at least one of "whether or not to configure (apply) transmit diversity to the PUSCH" or "which type of transmit diversity is to be configured (applied) to the PUSCH" based on the explicit information (for example, the above-described transmit diversity information) from the base station.

Alternatively, the user terminal may determine at least one of "whether or not to configure (apply) transmit diversity to the PUSCH" or "which type of transmit diversity is to be configured to the PUSCH" based on the implicit information (for example, the above-described repetition information) without the explicit information from the base station.

For example, the user terminal may be assumed that transmit diversity using the SC-SFBC is configured (applied) in a case where the number of repetitions indicated by information on the number of repetitions is larger than one.

Further, the user terminal may configure the transmit diversity based on a waveform of the PUSCH (DFT-s-OFDM or cyclic prefix-orthogonal frequency division multiplexing (CP-OFDM)). For example, the user terminal may be assumed that transmit diversity using the SFBC is configured in a case where a CP-OFDM waveform is configured and may be assumed that transmit diversity using the SC-SFBC is configured in a case where a DFT-s-OFDM waveform is configured.

Transmission control (second aspect) of the PUSCH in a case where transmit diversity is configured for the PUSCH and transmission control (third aspect) of a demodulation reference signal (DMRS) of the PUSCH will be described below.

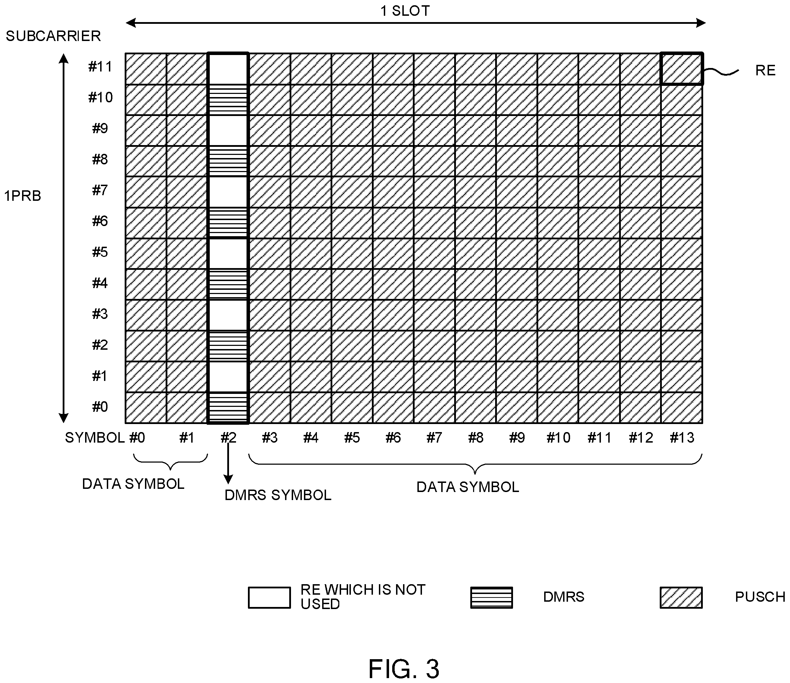

Fig. 3 is a view illustrating an example of mapping of the PUSCHs and the DMRSs of the PUSCHs. As illustrated in Fig. 3, one physical resource block (PRB) (which is also referred to as a resource block, or the like) may include 12 subcarriers #0 to #11, and one slot may include 14 symbols #0 to #13.

As illustrated in Fig. 3, the PUSCHs and the DMRSs of the PUSCHs may be mapped to different symbols (may be time-division multiplexed).

For example, as illustrated in Fig. 3, the PUSCHs may be mapped to given resource elements (REs) (for example, all REs) within each PRB allocated to the user terminal within one symbol. Note that a transmission bandwidth (frequency resources) is allocated to the PUSCH in a PRB unit. The transmission bandwidth (frequency resources, the number of PRBs) to be allocated to the PUSCH may be designated in a given field within the DCI.

Meanwhile, the DMRSs of the PUSCHs may be arranged at given intervals (for example, at an interval of one RE in Fig. 3) in one symbol. A configuration of the DMRSs arranged at given intervals is also called DMRS configuration type 1, or the like. Note that the DMRSs of the PUSCHs may be mapped to all REs within each PRB allocated to the user terminal in a similar manner to the PUSCHs.

Note that while in Fig. 3, the DMRSs are arranged in the symbol #2 for DMRSs (DMRS symbol), and the PUSCHs are arranged in symbols (data symbols) for data (PUSCHs) other than the DMRS symbol #2, positions and the number of the DMRS symbols and the data symbols are not limited to those illustrated in Fig. 3.

(Second aspect)

In a second aspect, transmission control of the PUSCH in a case where transmit diversity of the PUSCH using the SC-SFBC is configured will be described. Note that in the second aspect, as illustrated in Fig. 3, a case will be assumed where the PUSCHs are mapped to all REs of the transmission bandwidth allocated to the PUSCHs within one symbol, the PUSCHs only require to be mapped to REs which are available within the transmission bandwidth and do not have to be mapped to all REs.

In the second aspect, the user terminal may control a maximum interval of the subcarrier pair to which the PUSCHs are mapped based on whether or not repetitive transmission is configured for the PUSCH in a case where transmit diversity of the PUSCH using the SC-SFBC is configured.

<Case where repetitive transmission of PUSCH is configured>

In a case where transmit diversity of the PUSCH using the SC-SFBC is configured and repetitive transmission is configured for the PUSCH, the user terminal may control a maximum interval $p$ of the subcarrier pair to which the PUSCHs are mapped based on the number of repetitions of the PUSCH. Further, the user terminal may control the above-described maximum interval $p$ based on the number of repetitions $K$ of the PUSCH and the number of subcarriers $M$ (transmission bandwidth $M$) to be allocated to the PUSCH.

Here, the subcarrier pair may be two subcarriers to which a symbol pair (two symbols) which is block-encoded using the SC-SFBC is mapped.

For example, the user terminal may control the above-described maximum interval $p$ of the subcarrier pair to be smaller as the number of repetitions of the PUSCH increases (first maximum interval control). Alternatively, the user terminal may control the above-described maximum interval $p$ of the subcarrier pair to be greater as the number of repetitions of the PUSCH increases (second maximum interval control).

<<First maximum interval control>>

In the transmit diversity using the SC-SFBC, while an effect of preventing increase of a PAPR by DFT-s-OFDM typically decreases as the maximum interval $p$ of the subcarrier pair becomes smaller, influence of frequency selectivity becomes smaller. It is therefore assumed that a gain by the transmit diversity increases. Further, in a case where repetitive transmission of the PUSCH is configured, it is, for example, assumed that at least one of reliability or coverage enhancement is required.

Thus, in the first maximum interval control, as the number of repetitions of the PUSCH increases, the above-described maximum interval $p$ of the subcarrier pair may be controlled to be smaller, so as to increase a gain by the transmit diversity.

In the first maximum interval control, in a case where the number of repetitions $K$ of the PUSCH is 2, 4, 8, the maximum intervals $p(2)$, $p(4)$, $p(8)$ may be defined so as to satisfy relationship of $p(2) \geq p(4) \geq p(8)$.

Specifically, the maximum intervals $p(2)$, $p(4)$ and $p(8)$ may be defined based on the number of subcarriers $M$ (transmission bandwidth $M$) allocated to the PUSCH and a given coefficient. For example, the maximum intervals $p(2)$,

p(4) and p(8) may be defined such that p(2) = M/2, p(4) = M/3 and p(8) = M/4. Note that the given coefficient to be multiplied by M is not limited to 1/2, 1/3 and 1/4, and may be any coefficient which satisfies relationship of $p(2) \geq p(4) \geq p(8)$.

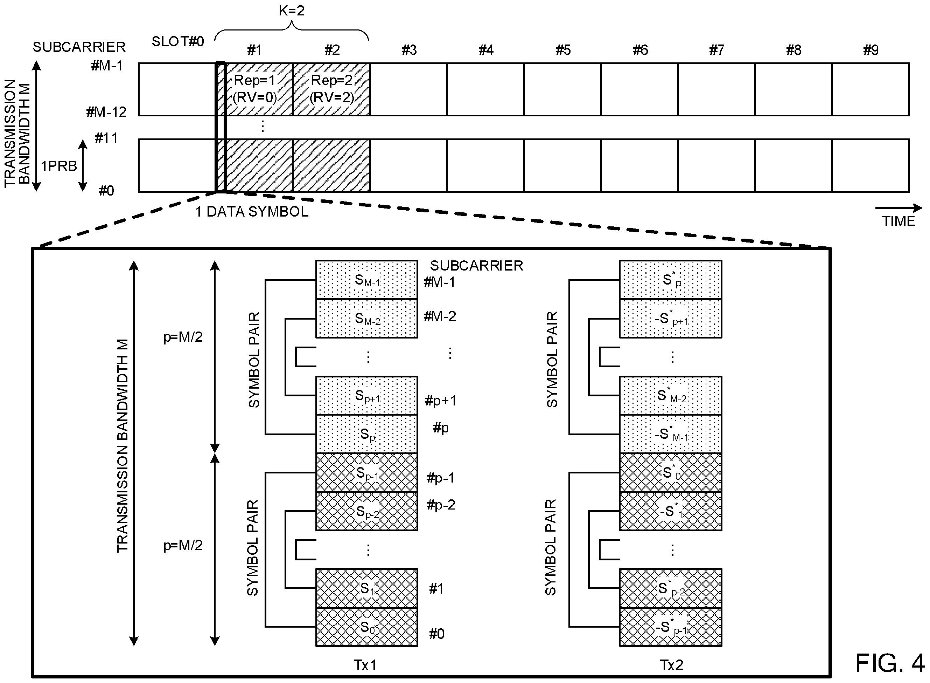

An example of subcarrier mapping in a case where p(2) = M/2, p(4) = M/3 and p(8) = M/4 will be described with reference to Fig. 4 to Fig. 6. Note that while it is assumed from Fig. 4 to Fig. 6 that repetition of the PUSCH is performed with consecutive K slots, the repetition is not limited to this, and at least part of the repetition may be performed with inconsecutive slots. Further, as illustrated from Fig. 4 to Fig. 6, a redundancy version (RV) of the PUSCH may be changed for each repetition in accordance with a given rule.

- Case where p(2) = M/2

In a case where p(2) = M/2, as illustrated in Fig. 4, M modulation symbols $\{S_0, S_1, ..., S_{p-2}, S_{p-1}, S_p, S_{p+1}, ..., S_{M-2}, S_{M-1}\}$ in a frequency domain output from the SC-SFBC encoder (see Fig. 1) are mapped to subcarriers #0 to #M-1 of the first transmitting antenna (Tx1).

Further, the SC-SFBC encoder (see Fig. 1) outputs M symbols $\{-S^*_{p-1}, S^*_{p-2}, ..., -S^*_1, S^*_0, -S^*_{M-1}, S^*_{M-2}, ..., -S^*_{p+1}, S^*_p\}$ obtained by encoding the above-described frequency-domain modulation symbols using the SC-SFBC in a symbol pair unit, changing the order, or the like. As illustrated in Fig. 3, the M symbols $\{-S^*_{p-1}, S^*_{p-2}, ..., -S^*_1, S^*_0, -S^*_{M-1}, S^*_{M-2}, ..., -S^*_{p+1}, S^*_p\}$ are mapped to subcarriers #0 to #M-1 of the second transmitting antenna (Tx2).

For example, at the transmitting antenna 1 in Fig. 4, symbol pairs of $\{S_0, S_{p-1}\}$ and $\{S_p, S_{M-1}\}$ are respectively mapped to subcarrier pairs of {#0, #p-1} and {#p, #M-1}, and the maximum interval p(2) becomes M/2. In a similar manner, at the transmitting antenna 2, symbol pairs $\{-S^*_{p-1}, S^*_0\}$ and $\{-S^*_{M-1}, S^*_p\}$ are respectively mapped to subcarrier pairs {#0, #p-1} and {#p, #M-1}, and the maximum interval p(2) becomes M/2.

- Case where p(4) = M/3

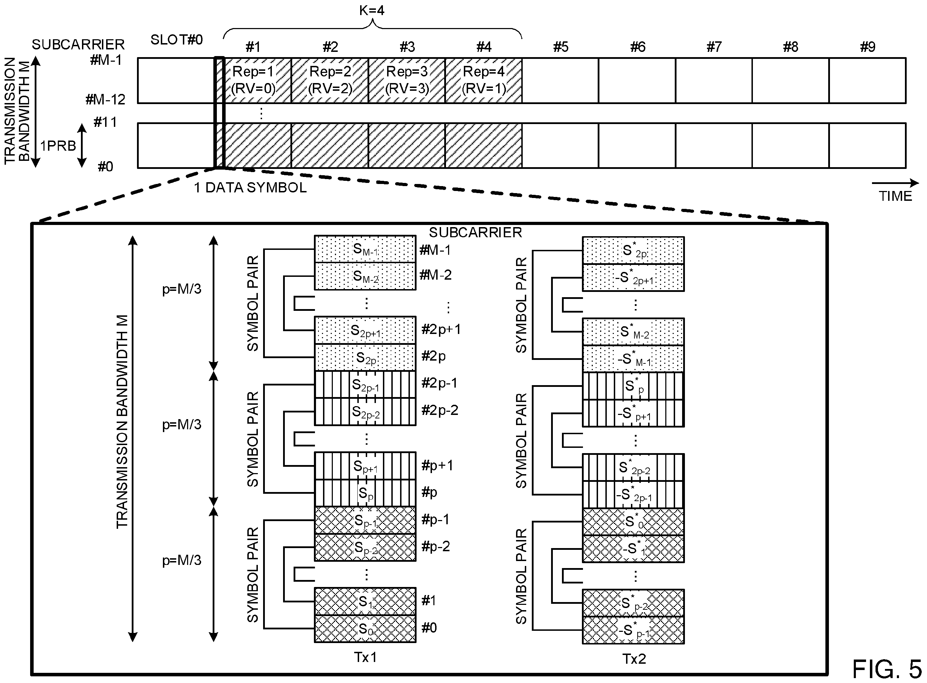

In a case where p(4) = M/3, as illustrated in Fig. 5, M modulation symbols $\{S_0, S_1, ..., S_{p-2}, S_{p-1}, S_p, S_{p+1}, ..., S_{2p-2}, S_{2p-1}, S_{2p}, S_{2p+1}, ..., S_{M-2}, S_{M-1}\}$ in a frequency domain output from the SC-SFBC encoder (see Fig. 1) are mapped to subcarriers #0 to #M-1 of the first transmitting antenna (Tx1).

Further, the SC-SFBC encoder (see Fig. 1) outputs M symbols $\{-S^*_{p-1}, S^*_{p-2}, ..., -S^*_1, S^*_0, S^*_{2p-1}, S^*_{2p-2}, ..., -S^*_{p+1}, -S^*_0, -S^*_{M-1}, S^*_{M-2}, ..., -S^*_{p+1}, S^*_p\}$ obtained by encoding the above-described frequency-domain modulation symbols using the SC-SFBC in a symbol pair unit, changing the order, or the like. As illustrated in Fig. 5, the M symbols $\{-S^*_{p-1}, S^*_{p-2}, ..., -S^*_1, S^*_0, -S^*_{2p-1}, S_{2p-2}, ..., -S_{p+1}, S^*_p, -S^*_{M-1}, S^*_{M-2}, ..., -S^*_{2p+1}, S^*_{2p}\}$ are to be mapped to subcarriers #0 to #M-1 of the second transmitting antenna (Tx2).

For example, at the transmitting antenna 1 in Fig. 5, symbol pairs of $\{S_0, S_{p-1}\}$, $\{S_p, S_{2p-1}\}$, and $\{S_{2p}, S_{M-1}\}$ are respectively mapped to subcarrier pairs of {#0, #p-1}, {#p, #2p-1}, and {#2p, #M-1}, and the maximum interval p(4) becomes M/3. In a similar manner, at the transmitting antenna 2, symbol pairs $\{-S^*_{p-1}, S^*_0\}$, $\{-S^*_{2p-1}, S^*_p\}$, and $\{-S^*_{M-1}, S^*_{2p}\}$ are respectively mapped to subcarrier pairs {#0, #p-1}, {#p, #2p-1}, and {#2p, #M-1}, and the maximum interval p(4) becomes M/3.

- Case where p(8) = M/4

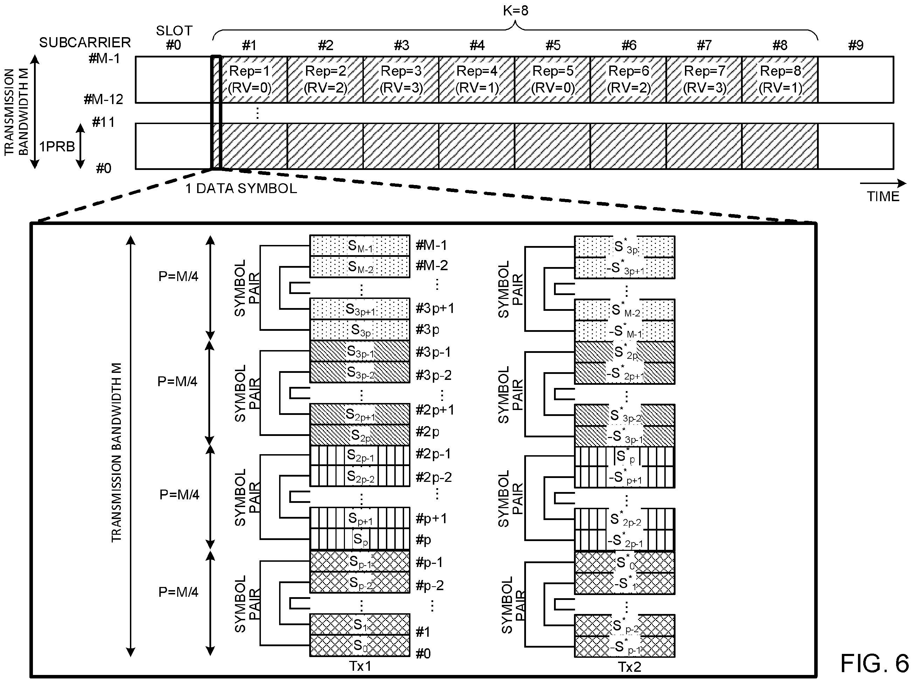

In a case where p(8) = M/4, as illustrated in Fig. 6, M modulation symbols $\{S_0, S_1, ..., S_{p-2}, S_{p-1}, S_p, S_{p+1}, ..., S_{2p-2}, S_{2p-1}, S_{2p}, S_{2p+1}, ..., S_{3p-2}, S_{3p-1}, S_{3p}, S_{3p+1}, ..., S_{M-2}, S_{M-1}\}$ in a frequency domain output from the SC-SFBC encoder (see Fig. 1) are mapped to subcarriers #0 to #M-1 of the first transmitting antenna (Tx1).

Further, the SC-SFBC encoder (see Fig. 1) outputs M symbols $\{-S^*_{p-1}, S^*_{p-2}, ..., -S^*_1, S^*_0, S^*_{2p-1}, S^*_{2p-2}, ..., -S^*_{p+1}, -S^*_0, -S^*_{M-1}, S^*_{M-2}, ..., -S^*_{p+1}, S^*_p\}$ obtained by encoding the above-described frequency-domain modulation symbols using the SC-SFBC in a symbol pair unit, changing the order, or the like. As illustrated in Fig. 6, the M symbols $\{-S^*_{p-1}, S^*_{p-2}, ..., -S^*_1, S^*_0, -S^*_{2p-1}, S^*_{2p-2}, ..., -S^*_{p+1}, S^*_p, -S^*_{3p-1}, S^*_{3p-2}, ..., -S^*_{2p+1}, S^*_{2p}, -S^*_{M-1}, S^*_{M-2}, ..., -S^*_{3p+1}, S^*_{3p}\}$ are to be mapped to subcarriers #0 to #M-1 of the second transmitting antenna (Tx2).

For example, at the transmitting antenna 1 in Fig. 6, symbol pairs of $\{S_0, S_{p-1}\}$, $\{S_p, S_{2p-1}\}$, $\{S_p, S_{3p-1}\}$, and $\{S_{3p}, S_{M-1}\}$ are respectively mapped to subcarrier pairs of {#0, #p-1}, {#p, #2p-1}, {#2p, #3p-1}, and {#3p, #M-1}, and the maximum interval p(8) becomes M/4. In a similar manner, at the transmitting antenna 2, symbol pairs $\{-S^*_{p-1}, S^*_0\}$, $\{-S^*_{2p-1}, S^*_p\}$, $\{-S^*_{3p-1}, S^*_{2p}\}$, and $\{-S^*_{M-1}, S^*_{3p}\}$ are respectively mapped to subcarrier pairs {#0, #p-1}, {#p, #2p-1}, {#2p, #3p-1}, and {#3p, #M-1}, and the maximum interval p(8) becomes M/4.

Note that while from Fig. 4 to Fig. 6, p(2), p(4) and p(8) are defined such that p(2) = M/2, p(4) = M/3 and p(8) = M/4, a value of the maximum interval p(K) corresponding to a repetition coefficient K is not limited to the above-described values, and may be any value which satisfies relationship of $p(2) \geq p(4) \geq p(8)$. For example, p(2), p(4) and p(8) may be such that p(2) = M/2, p(4) = M/4, and p(8) = M/4. Further, a value of the number of repetitions K is not limited to 2, 4 and 8, and may be any value.

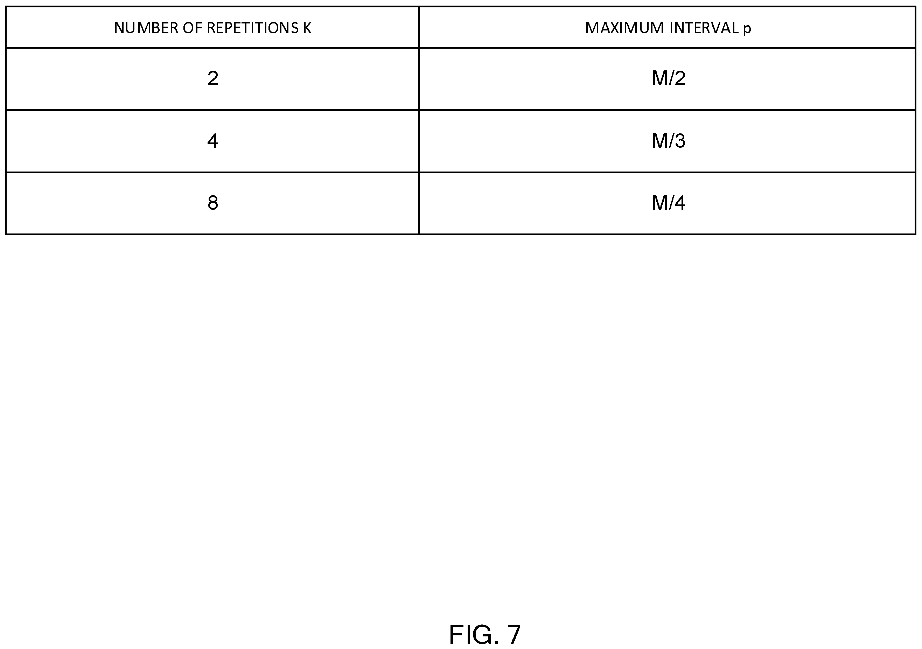

Further, the user terminal may determine the maximum interval p(K) corresponding to the number of repetitions K using a given table. Fig. 7 is a view illustrating an example of a table for first maximum interval control according to the second aspect. Fig. 7 illustrates a table in which the number of repetitions K of the PUSCH is associated with the maximum interval p. The user terminal may determine the maximum interval p(K) corresponding to the number of repetitions K indicated in the above-described information on the number of repetitions using the table.

Further, the user terminal may determine the maximum interval p(K) corresponding to the number of repetitions K using a given function. For example, the given function may be expressed using the following expression 1. Note that in expression 1, K is the number of repetitions of the PUSCH, and M is the number of subcarriers allocated to the PUSCH. [Math. 1]

Formula 1

$$p(\mathrm{K}) = \frac{M}{\left\lceil \dfrac{K+1}{2} \right\rceil}$$

Further, the user terminal may determine the maximum interval p(K) based on whether or not the number of repetitions K is less (equal to or greater or equal to or less) than a given threshold. For example, in a case where the number of repetitions K is less than the given threshold (for example, 8), the user terminal may determine p(K) such that p(K) = M/2, while in a case where the number of repetitions K is equal to or greater than the given threshold (for example, 8), the user terminal may determine p(K) such that p(K) = M/3.

«Second maximum interval control»

In a case where it is required to enhance coverage, it is assumed to increase power per RE by making the bandwidth (the number of PRBs, the number of subcarriers) to be allocated to the PUSCH smaller as well as configuring repetitive transmission of the PUSCH. In a case where the bandwidth becomes narrower, influence of frequency selectivity becomes smaller.

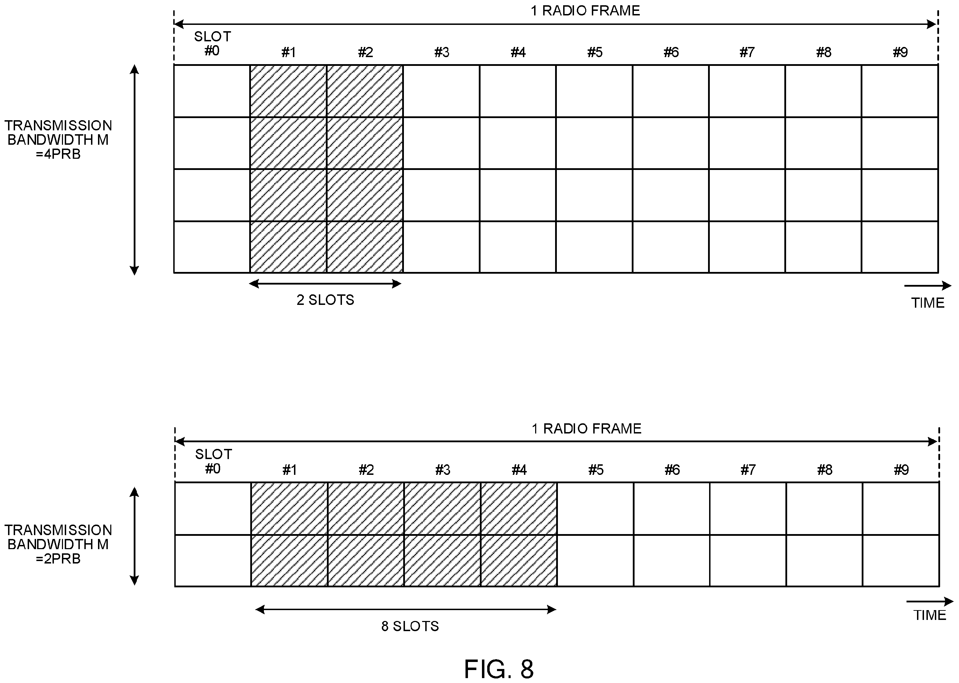

Fig. 8 is a view illustrating an example of control of power per RE according to the second aspect. The user terminal is assumed that total power per symbol in the transmission bandwidth allocated to the user terminal is equal. Thus, as illustrated in Fig. 8, it is possible to increase power per one RE by making the transmission bandwidth narrower. Increase of power per one RE is effective in enhancement of coverage.

In this manner, in a case where the transmission bandwidth is made narrower, as the number of repetitions of the PUSCH increases, an effect of preventing increase of the PAPR may be improved by controlling the above-described maximum interval p of the subcarrier pair to be greater.

In the second maximum interval control, in a case where the number of repetitions K of the PUSCH is 2, 4, 8, the maximum intervals p(2), p(4), p(8) may be defined so as to satisfy relationship of p(2) ≤ p(4) ≤ p(8).

Specifically, the maximum intervals p(2), p(4) and p(8) may be defined based on the number of subcarriers M (transmission bandwidth M) allocated to the PUSCH and a given coefficient. For example, the maximum intervals p(2), p(4) and p(8) may be defined such that p(2) = M/4, p(4) = M/3 and p(8) = M/2. Note that the given coefficient to be multiplied by M is not limited to 1/4, 1/3 and 1/2, and may be any coefficient which satisfies relationship of p(2) ≤ p(4) ≤ p(8).

Note that subcarrier mapping in a case where p(2) = M/4 can be applied by replacing the number of repetitions K = 8 in Fig. 6 with K = 2. In a similar manner, subcarrier mapping in a case where p(8) = M/2 can be applied by replacing the number of repetitions K = 2 in Fig. 4 with K = 8. Note that subcarrier mapping in a case where p(4) = M/3 is as described in Fig. 5.

Further, in the second maximum interval control, a value of the maximum interval p(K) corresponding to the repetition coefficient K is not limited to p(2) = M/2, p(4) = M/3 and p(8) = M/4, and may be any value which satisfies relationship of p(2) ≤ p(4) ≤ p(8). For example, p(2), p(4) and p(8) may be such that p(2) = M/4, p(4) = M/4 and p(8) = M/2. Further, a value of the number of repetitions K is not limited to 2, 4 and 8, and may be any value.

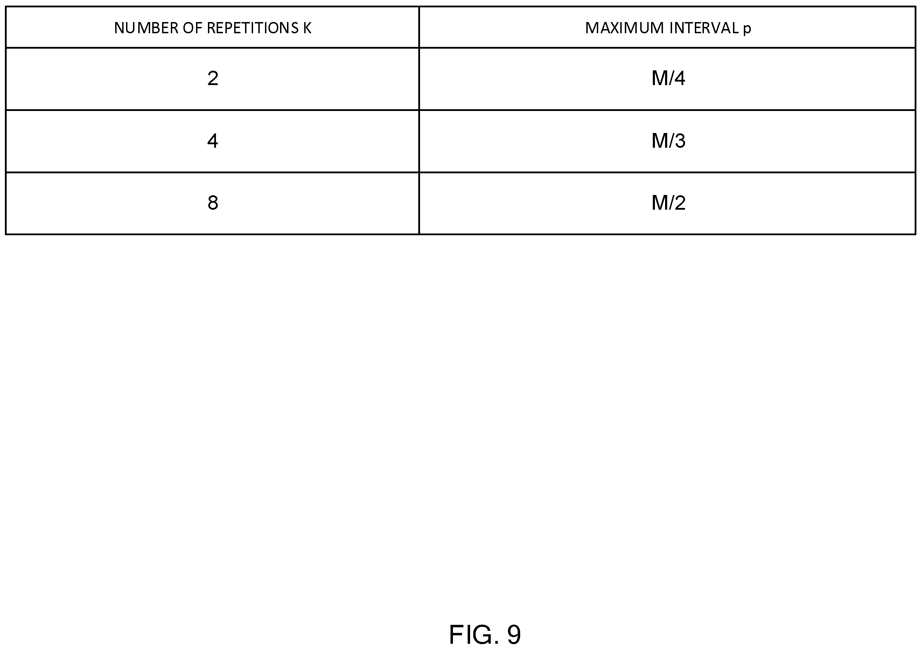

Further, the user terminal may determine the maximum interval p(K) corresponding to the number of repetitions K using a given table. Fig. 9 is a view illustrating an example of a table for second maximum interval control according to the second aspect. Fig. 9 illustrates a table in which the number of repetitions K of the PUSCH is associated with the maximum interval p. The user terminal may determine the maximum interval p(K) corresponding to the number of repetitions K indicated in the above-described information on the number of repetitions using the table.

Further, the user terminal may determine the maximum interval p(K) corresponding to the number of repetitions K using a given function. For example, the given function may be expressed using the following formula 2. Note that in formula 2, K is the number of repetitions of the PUSCH, and M is the number of subcarriers allocated to the PUSCH.

[Math. 2]

Formula 2

$$p(\mathrm{K}) = \frac{M}{\left\lceil \frac{12}{\mathrm{K}} \right\rceil}$$

Further, the user terminal may determine the maximum interval p(K) based on whether or not the number of repetitions K is less (equal to or greater or equal to or less) than a given threshold. For example, in a case where the number of repetitions K is equal to or greater than the given threshold (for example, 4), the user terminal may determine p(K) such that p(K) = M/2, while in a case where the number of repetitions K is less than the given threshold (for example, 4), the user terminal may determine p(K) such that p(K) = M/3.

«Switching between first maximum interval control and second maximum interval control»

Switching between the above-described first maximum interval control and the above-described second maximum interval control will be described next. Here, switching between the first maximum interval control and the second maximum interval control may be restated as switching of magnitude relationship of the maximum intervals p of the subcarrier pairs for each the number of repetitions (for example, switching between $p(2) \geq p(4) \geq p(8)$ and $p(2) \leq p(4) \leq p(8)$).

Switching between the first maximum interval control and the second maximum interval control may be controlled by a notification bit using at least one of higher layer signaling (for example, RRC) or physical layer signaling (for example, DCI).

«Capability information of user terminal»

As described above in the first or the second maximum interval control, the user terminal may notify the base station as to whether or not the maximum interval p(K) of the subcarrier pair can be controlled in accordance with the number of repetitions K of the PUSCH, as capability information (UE capability) of the user terminal.

<Case where repetitive transmission of PUSCH is not configured>

In a case where transmit diversity of the PUSCH using the SC-SFBC is configured and repetitive transmission is not configured for the PUSCH, the user terminal may control the maximum interval p of the subcarrier pair based on the number of PRBs (for example, the number of consecutive PRBs) allocated to the PUSCH.

For example, the user terminal may control the above-described maximum interval p of the subcarrier pair to be smaller as the number of PRBs $N_{PRB}$ allocated to the PUSCH increases. Further, the user terminal may determine the maximum interval p(K) corresponding to the number of PRBs $N_{PRB}$ in a given range using a given table.

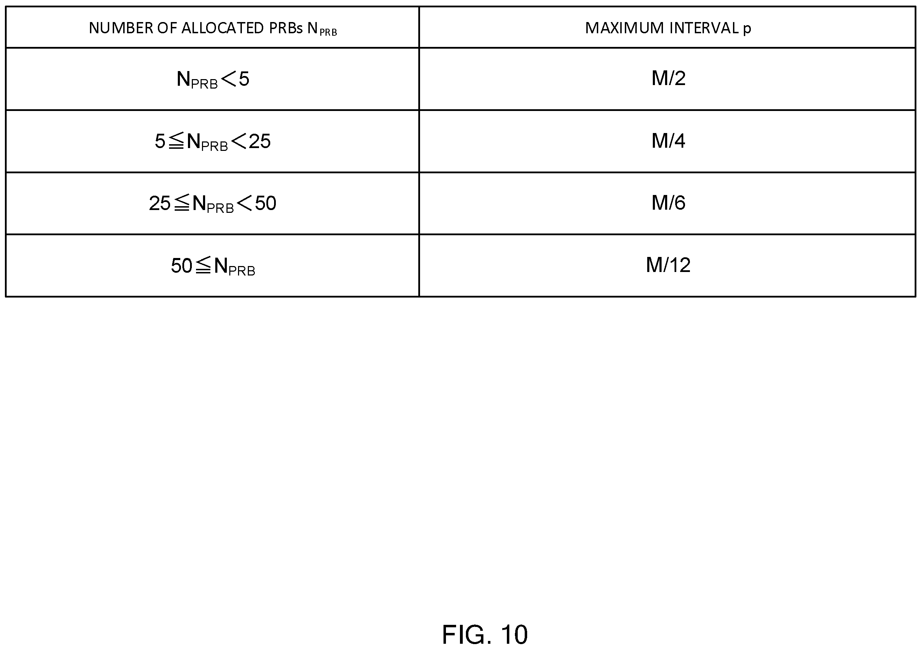

Fig. 10 is a view illustrating an example of a table for maximum interval control in accordance with the number of PRBs according to the second aspect. Fig. 10 illustrates a table in which the number of PRBs $N_{PRB}$ allocated to the PUSCH is associated with the maximum interval p. As illustrated in Fig. 10, one or more thresholds for the number of PRBs $N_{PRB}$ may be provided, and the maximum interval p may be associated with a plurality of ranges defined with the one or more thresholds.

For example, in Fig. 10, if the $N_{PRB}$ < 5, the maximum interval p = M/2. If $5 \leq$ the number of PRBs $N_{PRB}$ < 25, the maximum interval p = M/4. If $25 \leq$ the $N_{PRB}$ < 25, the maximum interval p = M/6. If $50 \leq$ the $N_{PRB}$, the maximum interval p = M/12. Note that the maximum interval p associated with each range of the number of PRBs, the number and the value of thresholds of the $N_{PRB}$ are not limited to the values illustrated in Fig. 10.

For example, in a case where the number of PRBs $N_{PRB}$ allocated to the PUSCH is 1, according to the table illustrated in Fig. 10, the maximum interval p = M/2. Subcarrier mapping in this case can be applied by replacing the number of repetitions K = 2 in Fig. 4 with K = 1 and setting M = 12.

Further, in a case where the number of PRBs $N_{PRB}$ allocated to the PUSCH is 10, according to the table illustrated in Fig. 10, the maximum interval p = M/4. Subcarrier mapping in this case can be applied by replacing the number of repetitions K = 8 in Fig. 6 with K = 1 and setting M = 120.

Note that the user terminal may determine the maximum interval p $(N_{PRB})$ corresponding to the number of PRBs $N_{PRB}$ allocated to the PUSCH using a given function. For example, the given function may be expressed using the following expression 3. Note that in expression 3, the $N_{PRB}$ is the number of PRBs allocated to the PUSCH, and M is the number of subcarriers allocated to the PUSCH.

[Math. 3]

Formula 3

$$p(N_{PRB}) = \frac{M}{2 \times \left\lceil \dfrac{N_{PRB}}{8} \right\rceil}$$

Further, the user terminal may notify the base station as to whether or not the maximum interval p ($N_{PRB}$) of the subcarrier pair can be controlled in accordance with the number of PRBs $N_{PRB}$ allocated to the PUSCH, as capability information (UE capability) of the user terminal.

(Third Aspect)

In a third aspect, transmission control of the DMRS of the PUSCH will be described. Note that the third aspect can be applied to other reference signals other than the DMRS of the PUSCH. Further, a difference from the second aspect will be mainly described in the third aspect.

As described in the first aspect, in a case where the transmit diversity (for example, the SC-SFBC or the SFBC) is configured for the PUSCH, the user terminal may apply transmit diversity to the DMRS of the PUSCH in a similar manner to the PUSCH or may apply transmit diversity to the PUSCH and does not have to apply transmit diversity to the DMRS.

In the third aspect, in a case where the DMRSs are mapped to all available REs of each PRB allocated to the PUSCHs within one symbol in a similar manner to the PUSCHs (see the data symbols in Fig. 3), the user terminal can control the maximum interval p of the subcarrier pair to which the DMRSs are mapped in a similar manner to a case of the PUSCHs described in the second aspect.

Meanwhile, as indicated in the DMRS symbol in Fig. 3, in a case where the DMRSs are mapped to REs at given intervals (for example, at one RE interval in Fig. 3) within each PRB allocated to the PUSCHs (DMRS configuration type 1), the user terminal may use a method different from that used for the PUSCH to control the maximum interval p of the subcarrier pair to which the DMRSs are mapped.

<Case where repetitive transmission of PUSCH is configured>

In the third aspect, in a case where DMRS configuration type 1 is configured, and repetitive transmission of the PUSCH is configured, the user terminal may determine whether or not to control the maximum interval p of the subcarrier pair to which the DMRSs are mapped based on the number of repetitions of the PUSCH, based on the number of PRBs allocated to the PUSCH.

Specifically, the user terminal may control the maximum interval p (for example, p = M) regardless of the number of repetitions K of the PUSCH in a case where the number of PRBs $N_{PRB}$ allocated to the PUSCH is one PRB.

Meanwhile, in a case where the number of PRBs $N_{PRB}$ allocated to the PUSCH is equal to or larger than two PRBs, the user terminal may control the maximum interval p based on the number of repetitions K of the PUSCH.

<<Case where $N_{PRB}$ = 1>>

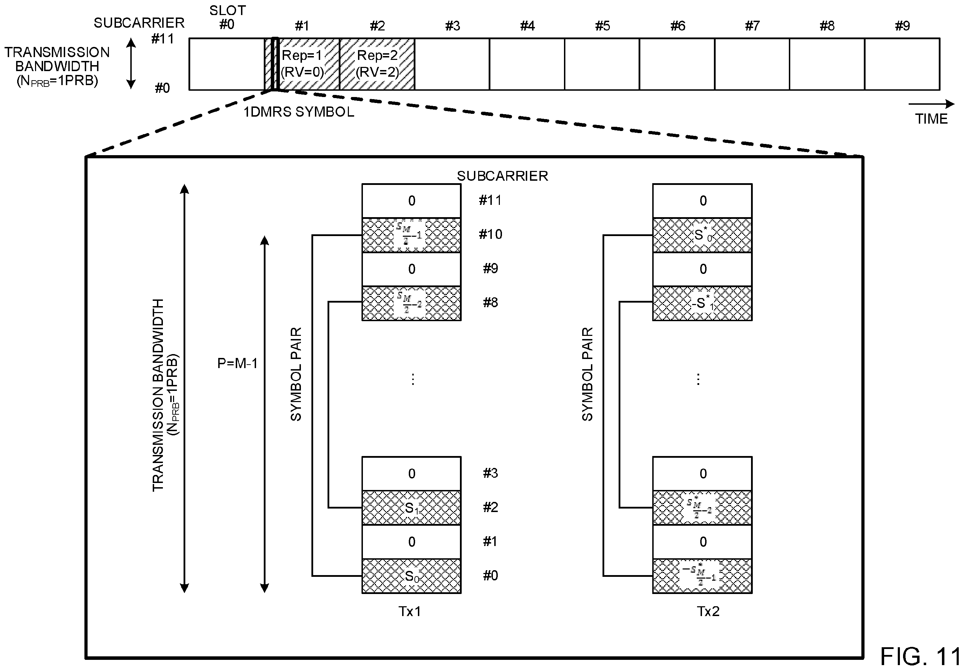

Fig. 11 is a view illustrating an example of maximum interval control of the subcarrier pair to which the DMRSs are mapped in a case where $N_{PRB}$ = 1 according to the third aspect. In Fig. 11, it is assumed that the transmission bandwidth allocated to the PUSCH is one PRB. Note that while Fig. 11 illustrates an example of a case where the number of repetitions K of the PUSCH is 2, the same will also apply to a case where the number of repetitions K = 4, 8, or the like.

As described in the second aspect, in a case where the number of repetitions K = 2, the maximum interval p(2) corresponding to the number of repetitions K = 2 becomes a value (that is, p(K) = M·α) obtained by multiplying the transmission bandwidth (the number of subcarriers) M by a given coefficient α (α < 1, for example, α = 1/2 or 1/4).

Meanwhile, as illustrated in Fig. 11, it is assumed in the DMRS symbols that the DMRSs are not arranged to all 12 subcarriers within one PRB, and the DMRSs are arranged in subcarriers at given intervals (here, at intervals of two subcarriers). In this case, in a case where p(K) is defined as M·α (here, α < 1), there is a possibility that a symbol (subcarrier) which cannot be paired may appear.

Thus, as illustrated in Fig. 11, in a case where the transmission bandwidth allocated to the PUSCH is one PRB, p(K) may be set as M-1. As illustrated in Fig. 11, in a case where the DMRSs are mapped at intervals of one subcarrier within one DMRS symbol, the SC-SFBC encoder outputs M/2 (= 6) symbols {$S_0$, $S_1$, ..., $S_{M/2-2}$, $S_{M/2-1}$}. The user terminal inserts 0 (zero) at positions corresponding to six subcarriers to which the M/2 symbols are not mapped and performs mapping to subcarriers #0 to #11 of the first transmitting antenna (Tx1).

Further, the SC-SFBC encoder (see Fig. 1) outputs M/2 (= 6) symbols $\{-S^*_{M/2-1}, S^*_{M/2-2}, -S^*_1, S^*_0\}$ obtained by encoding the above-described frequency-domain modulation symbols using the SC-SFBC in a symbol pair unit, changing the order, or the like. The user terminal inserts 0 (zero) at positions corresponding to six subcarriers to which the M/2 symbols are not mapped and performs mapping to the subcarriers #0 to #11 of the second transmitting antenna (Tx2) .

For example, at the transmitting antenna 1 in Fig. 11, a symbol pair $\{S_0, S_{M/2-1}\}$ is mapped to a subcarrier pair $\{#0, #10\}$. In a similar manner, at the transmitting antenna 2, a symbol pair $\{-S^*_{M/2-1}, S^*_0\}$ is mapped to a subcarrier pair $\{#0, #10\}$.

Note that while in Fig. 11, in a case where the number of RPBs allocated to the PUSCH is one PRB, the SC-SFBC for which the maximum interval p of the subcarrier pair to which the DMRSs are mapped is M-1 is applied, the present disclosure is not limited to this. For example, in a case where only one PRB is allocated to the PUSCH, the SFBC may be applied.

As illustrated in Fig. 11, in a case where the number of RPBs allocated to the PUSCH is one PRB, subcarrier mapping of the symbol pair of the DMRSs to be used in the SC-SFBC is controlled using the maximum interval p (for example, p = M-1) different from the maximum interval p in a case where the number of PRBs is equal to or larger than two PRBs. It is therefore possible to prevent occurrence of a remainder upon pairing of the symbols or the subcarriers by using the maximum interval p(K) in accordance with the number of repetitions K.

<<Case where $N_{PRB} \geq 2$>>

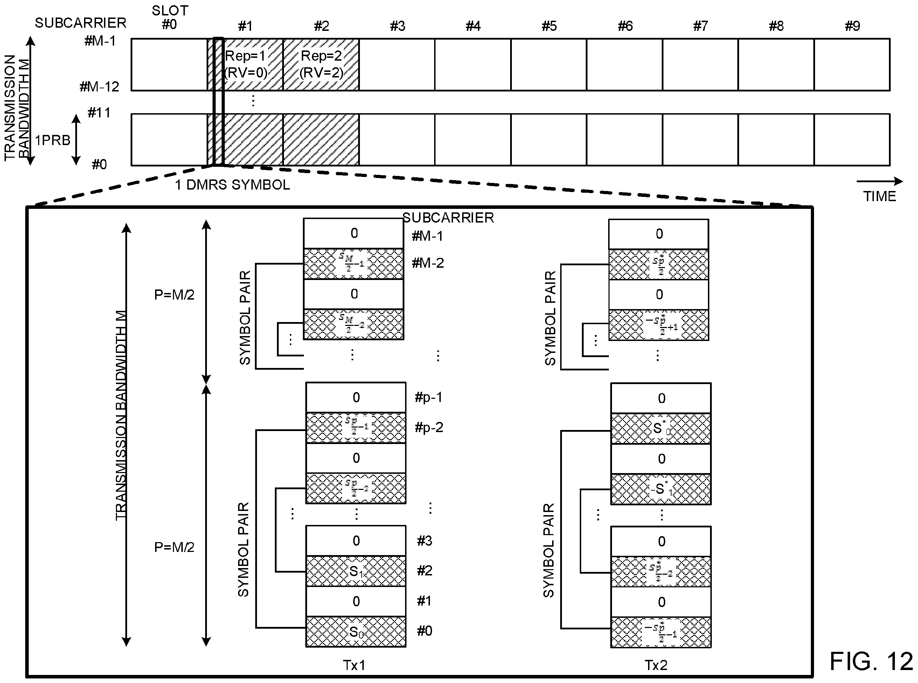

In a case where the number of PRBs $N_{PRB}$ allocated to the PUSCH is equal to or larger than two PRBs, it is possible to apply control of the maximum interval p in the second aspect. An example of a case where control of the maximum interval p in the second aspect is applied to DMRS configuration type 1 will be described with reference to Fig. 12.

Fig. 12 is a view illustrating an example of maximum interval control of a subcarrier pair to which DMRSs are mapped in a case where $N_{PRB} \geq 2$ according to a third aspect. A difference from Fig. 11 will be mainly described in Fig. 12.

As illustrated in Fig. 12, in a case where the transmission bandwidth M allocated to the PUSCH is equal to or larger than two PRBs, the maximum interval p(K) of the subcarrier pair to which a symbol pair of the DMRSs is mapped may be controlled based on the number of repetitions K in a similar manner to the second aspect. For example, while Fig. 12 illustrates an example of a case where K = 2 and p(2) = M/2, the value of p(2) is not limited to this.

As illustrated in Fig. 12, in a case where the DMRSs are mapped at intervals of one subcarrier within one DMRS symbol, the SC-SFBC encoder outputs M/2 symbols $\{S_0, S_1, ..., S_{p/2-1}, S_{p/2-1}, ..., S_{M/2-2}, S_{M/2-1}\}$ . The user terminal inserts 0 (zero) at positions corresponding to 2/M subcarriers to which the M/2 symbols are not mapped and performs mapping to subcarriers #0 to #M-1 of the first transmitting antenna (Tx1).

Further, the SC-SFBC encoder (see Fig. 1) outputs M/2 symbols $\{-S^*_{p/2-1}, S_{p/2-2}, ..., -S^*_1, S^*_0 ..., -S^*_{p/2+1}, S^*_{p/2}\}$ obtained by encoding the above-described frequency-domain modulation symbols using the SC-SFBC in a symbol pair unit, changing the order, or the like. The user terminal inserts 0 (zero) at positions corresponding to M/2 subcarriers to which the M/2 symbols are not mapped and performs mapping to the subcarriers #0 to #M-1 of the second transmitting antenna (Tx2).

For example, at the transmitting antenna 1 in Fig. 12, symbol pairs of $\{S_0, S_{p/2-1}\}$ and $\{S_{p/2}, S_{M/2-1}\}$ are respectively mapped to subcarrier pairs of $\{#0, #p-1\}$ and $\{#p, #M-2\}$, and the maximum interval p(2) becomes M/2. In a similar manner, at the transmitting antenna 2, symbol pairs $\{-S^*_{p/2-1}, S^*_0\}$ and $\{-S^*_{M/2-1}, S^*_{p/2}\}$ are respectively mapped to subcarrier pairs $\{#0, #p-2\}$ and $\{#p, #M-2\}$, and the maximum interval p(2) becomes M/2.

Note that in DMRS configuration type 1 illustrated in Fig. 12, the maximum interval p(K) of the subcarrier pair to which the symbol pair of the DMRSs is mapped may be controlled based on the number of repetitions K of the PUSCH. For example, as described in the second aspect, in a case where the number of repetitions K of the PUSCH is 2, 4 and 8, the maximum interval p(2), p(4) and p(8) may be defined so as to satisfy relationship of $p(2) \geq p(4) \geq p(8)$ or $p(2) \leq p(4) \leq p(8)$ .

<Case where repetitive transmission of PUSCH is not configured>

In the third aspect, in a case where DMRS configuration type 1 is configured, and repetitive transmission is configured for the PUSCH, the user terminal may control the maximum interval p of the subcarrier pair to which the modulation symbol pair of the DMRSs is mapped based on the number of PRBs (for example, the number of consecutive PRBs) allocated to the PUSCH.

For example, the user terminal may control the above-described maximum interval p of the subcarrier pair to be smaller as the number of PRBs $N_{PRB}$ allocated to the PUSCH increases. Further, the user terminal may determine the maximum interval p(K) corresponding to the number of PRBs $N_{PRB}$ in a given range using a given table.

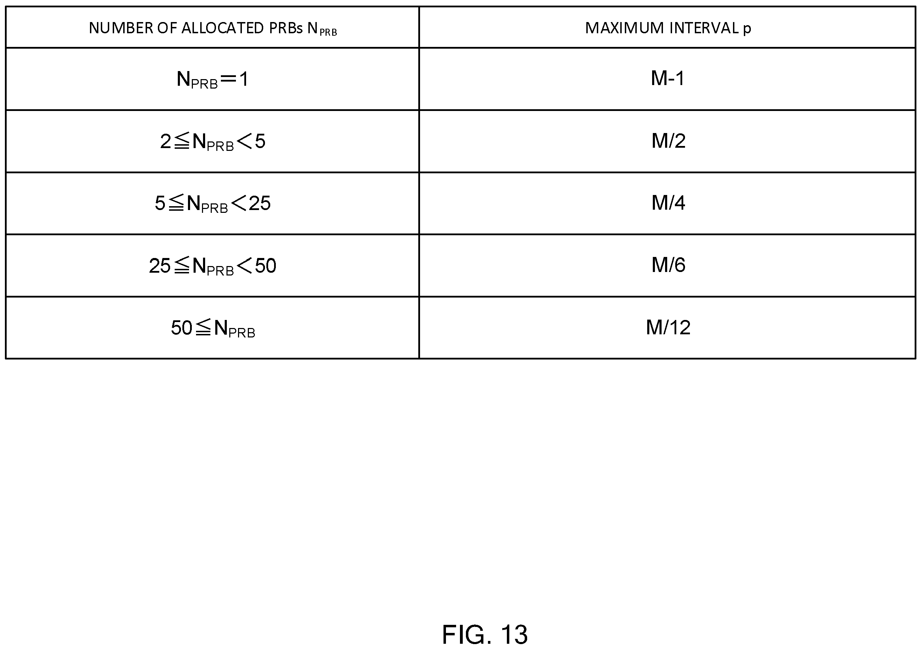

Fig. 13 is a view illustrating an example of a table for maximum interval control in accordance with the number of PRBs according to the third aspect. The table illustrated in Fig. 13 is different from that in Fig. 10 in that the maximum interval p in a case where the number of allocated PRBs $N_{PRB}$ is one PRB is defined. A difference from Fig. 10 will be mainly described below.

For example, in a case where the number of PRBs $N_{PRB}$ allocated to the PUSCH is 1, according to the table illustrated in Fig. 13, the maximum interval p = M-1. Subcarrier mapping in this case can be applied by replacing the number of repetitions K = 2 in Fig. 11 with K = 1.

Note that the user terminal may determine the maximum interval p ($N_{PRB}$) corresponding to the number of PRBs $N_{PRB}$ allocated to the PUSCH using a given function.

<First modified example>

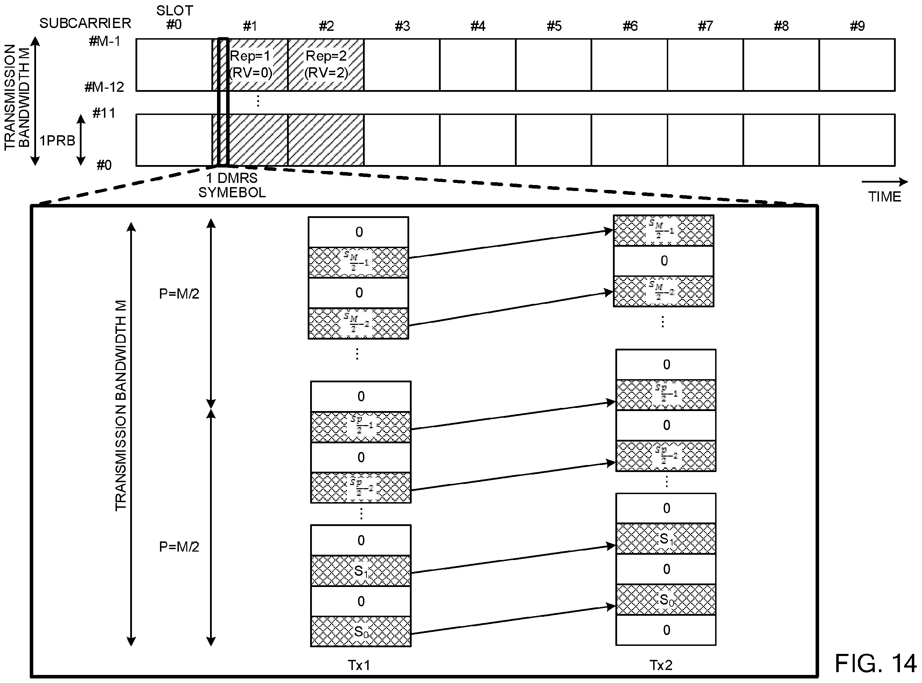

Fig. 14 is a view illustrating a modified example of the maximum interval control of the subcarrier pair to which the DMRSs are mapped according to the third aspect. Fig. 14 is different from Fig. 12 in that the SC-SFBC is not applied to the DMRSs. A difference from Fig. 12 will be mainly described in Fig. 14.

Mapping of the modulation symbols of the DMRSs to the subcarriers #0 to #M-1 of the first transmitting antenna (Tx1) in Fig. 14 is similar to that in Fig. 12. Meanwhile, values mapped to the subcarriers #0 to #M-1 of Tx1 may be mapped to the subcarriers #0 to #M-1 of the second transmitting antenna (Tx2) in Fig. 14 at the user terminal while mapping positions are shifted in a frequency direction by a given offset (here, one subcarrier).

Note that while Fig. 14 illustrates an example of a case where the SFTD is not applied, the mapping positions of the Tx2 may be shifted in a frequency direction based on a given offset in a case where the SFTD (for example, the SC-SFBC or the SFBC) is applied.

Further, while Fig. 14 illustrates an example of a case where the number of PRBs allocated to the PUSCH is equal to or larger than two PRBs, similar control may be performed in a case where the number of allocated PRBs is one PRB.

<Second modified example>

The user terminal in a second modified example of the third aspect may control mapping of the DMRSs of the PUSCH based on at least one of a waveform of the PUSCH (for example, DFT-s-OFDM or CP-OFDM) or a type of transmit diversity.

For example, in a case where the waveform of the PUSCH is the CP-OFDM, a constant amplitude zero auto correlation (CAZAC) sequence is used for the DMRSs. In this case, it can be considered that influence of frequency selective fading can be made smaller and a larger gain of the transmit diversity can be obtained in a case where the symbol pair is neighboring. Thus, in a case of the CP-OFDM, transmit diversity using the SFBC may be applied.

In a case where the CP-OFDM and the SFBC are configured, the user terminal may determine mapping positions of the DMRSs in the DMRS symbols based on a given rule. The given rule may define, for example, provision of a given offset to the mapping positions of the DMRSs to REs having given subcarrier indexes.

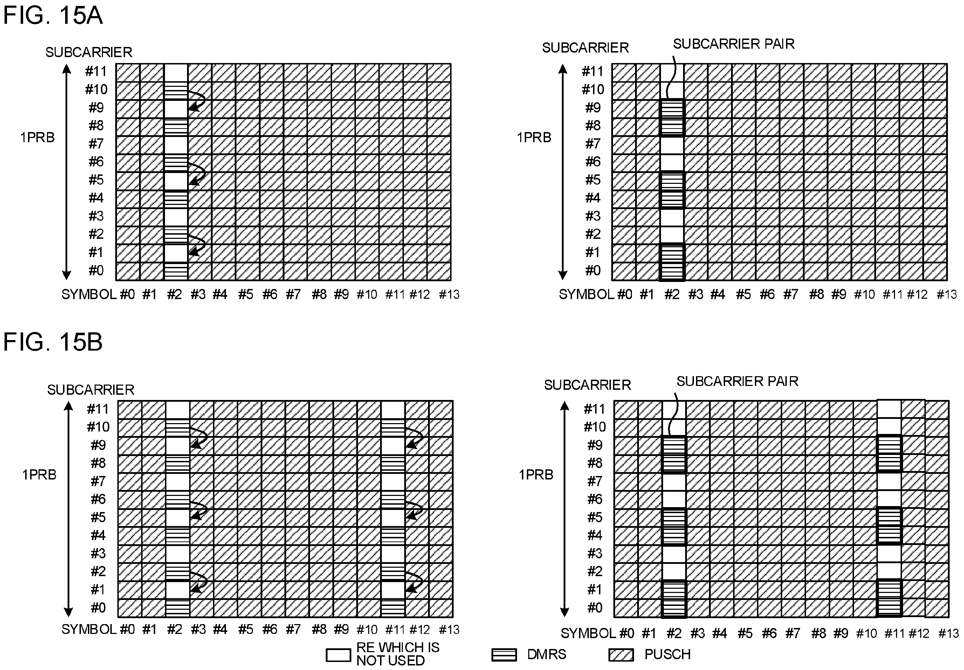

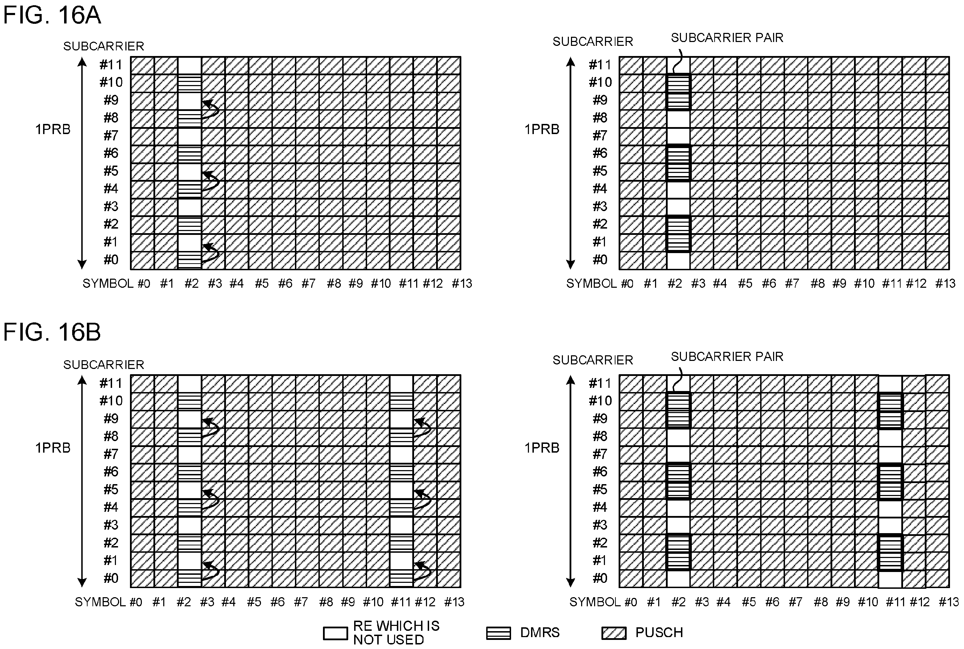

Fig. 15A Fig. 15B, Fig. 16A, and Fig. 16B are views illustrating an example of control of DMRS mapping positions in a case where CP-OFDM and an SFBC are configured. Fig. 15A and Fig. 16A illustrate a case where no additional DMRS is provided. Fig. 15B and Fig. 16B illustrate a case where additional DMRSs are provided.

For example, as illustrated in Fig. 15A and Fig. 16A, the user terminal may shift positions of the DMRSs to be mapped to the REs having given subcarrier indexes (#2, #6 and #10 in Fig. 15A, and #0, #4 and $8 in Fig. 16A) in a frequency direction using a given offset (here, -1) in a case where a given condition is satisfied. As illustrated in Fig. 15B and Fig. 16B, the positions of the DMRSs are shifted in a similar manner also in a case where a symbol #11 in which additional DMRSs are arranged is provided.

The above-described given condition may be, for example, at least one of the following:

- a case where the user terminal is not notified of configuration information (DMRS-UplinkConfig) to be used for configuring uplink DMRSs for PUSCHs
- a case where the user terminal is not notified of information (dmrs-Type) indicating a type of the DMRS
- a case where DMRS configuration type 1 is configured

As illustrated in Fig. 15A, Fig. 15B, Fig. 16A and Fig. 16B, in a case where the DMRSs are mapped to neighboring subcarriers while a given offset is provided to given subcarrier indexes, the user terminal may pair modulation symbols of the DMRSs to be mapped to the neighboring subcarriers (subcarrier pair) and perform encoding using the SFBC.

Note that in a case where the waveform of the PUSCH is the DFT-s-OFDM, the above-described mapping control of the DMRSs does not have to be applied. This can prevent increase of the PAPR due to the above-described mapping control in a case of the DFT-s-OFDM waveform.

(Radio Communication System)

Now, the structure of a radio communication system according to the present embodiment will be described below. In this radio communication system, communication is performed using one or a combination of the radio communication methods according to the embodiments of the present disclosure.

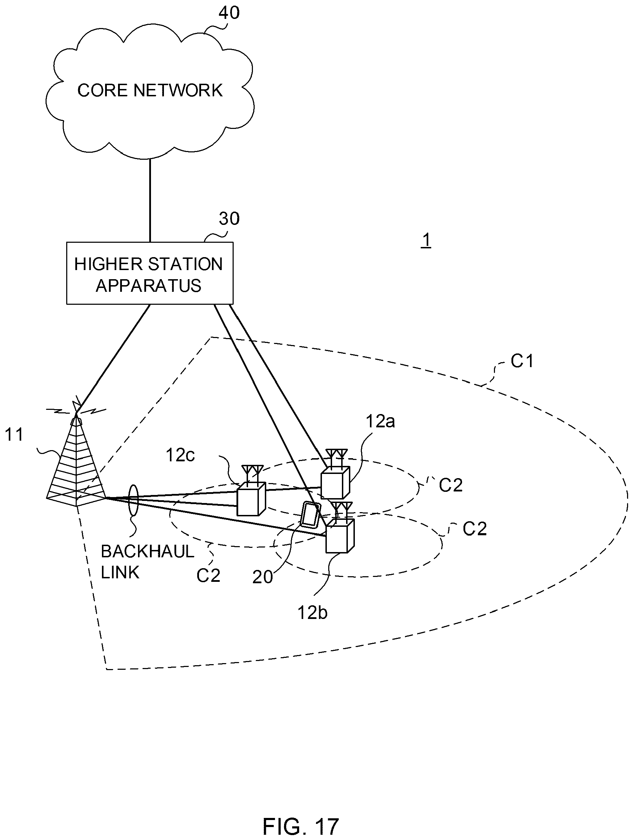

Fig. 17 is a view illustrating an example of a schematic configuration of a radio communication system according to the present embodiment. A radio communication system 1 can adopt carrier aggregation (CA) and/or dual connectivity (DC) to group a plurality of fundamental frequency blocks (component carriers) into one, where the LTE system bandwidth (for example, 20 MHz) constitutes one unit.

Note that the radio communication system 1 may be referred to as "LTE (Long Term Evolution)," "LTE-A (LTE-Advanced)," "LTE-B (LTE-Beyond)," "SUPER 3G, " "IMT-Advanced," "4G (4th generation mobile communication system)," "5G (5th generation mobile communication system)," "NR (New Radio)," "FRA (Future Radio Access)," "New-RAT (Radio Access Technology)," and so on, or may be seen as a system to implement these.

The radio communication system 1 includes a base station 11 that forms a macro cell C1 covering a relatively wide coverage, and base stations 12 (12a to 12c) that are placed within the macro cell C1 and that form small cells C2, which are narrower than the macro cell C1. Also, user terminal 20 is placed in the macro cell C1 and in each small cell C2. The arrangement, number and so on of cells and user terminal 20 are not limited to those illustrated in the drawings.

The user terminal 20 can connect with both the base station 11 and the base stations 12. It is assumed that the user terminal 20 uses the macro cell C1 and the small cells C2 simultaneously using CA or DC. Furthermore, the user terminal 20 may apply CA or DC using a plurality of cells (CCs).

Between the user terminal 20 and the base station 11, communication can be carried out using a carrier of a relatively low frequency band (for example, 2 GHz) and a narrow bandwidth (referred to as an "existing carrier," a "legacy carrier" and so on) . Meanwhile, between the user terminal 20 and the base stations 12, a carrier of a relatively high frequency band (for example, 3.5 GHz, 5 GHz and so on) and a wide bandwidth may be used, or the same carrier as that used in the base station 11 may be used. Note that the structure of the frequency band for use in each base station is by no means limited to these.

The user terminal 20 can carry out communication in each cell using time division duplex (TDD) and/or frequency division duplex (FDD). Further, in each cell (carrier), a single numerology may be applied, or a plurality of different numerologies may be applied.

The numerology may be a communication parameter applied to transmission and/or reception of a signal and/or channel, and may indicate, for example, at least one of subcarrier spacing, bandwidth, symbol length, cyclic prefix length, subframe length, TTI length, number of symbols per TTI, radio frame configuration, specific filtering processing performed by a transceiver in a frequency domain, specific windowing processing performed by a transceiver in a time domain and so on. For example, for a certain physical channel, when the subcarrier spacing differs and/or the numbers of OFDM symbols are different between the constituent OFDM symbols, this case may be described that they are different in numerology.

The base station 11 and the base station 12 (or between two base stations 12) may be connected by wire (for example, means in compliance with the common public radio interface (CPRI) such as optical fiber, an X2 interface, and so on) or wirelessly.

The base station 11 and the base stations 12 are each connected with higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each base station 12 may be connected with the higher station apparatus 30 via the base station 11.

Note that the base station 11 is a base station having a relatively wide coverage, and may be referred to as a "macro base station," an "aggregate node," an "eNB (eNodeB)," a "transmitting/receiving point" and the like. Also, the base stations 12 are base stations having local coverages, and may be referred to as "small base stations," "micro base stations," "pico base stations," "femto base stations," "HeNBs (Home eNodeBs)," "RRHs (Remote Radio Heads)," "transmission/reception points" and so on. Hereinafter the base stations 11 and 12 will be collectively referred to as "base stations 10," unless specified otherwise.

Each user terminal 20 is a terminal to support various communication schemes such as LTE, LTE-A and so on, and may be either a mobile communication terminal (mobile station) or a stationary communication terminal (fixed station).

In the radio communication system 1, as radio access schemes, orthogonal frequency division multiple access (OFDMA) is applied to the downlink, and single-carrier frequency division multiple access (SC-FDMA) and/or OFDMA are applied to the uplink.

OFDMA is a multi-carrier communication scheme to perform communication by dividing a frequency band into a plurality of narrow frequency bands (subcarriers) and mapping data to each subcarrier. SC-FDMA is a single-carrier communication method of reducing an interference between terminals by dividing, for each of terminals, a system bandwidth into bands composed of one or continuous resource blocks, and causing a plurality of terminals to use mutually different bands. Note that the uplink and downlink radio access schemes are not limited to the combinations of these, and other radio access schemes can be used as well.

In the radio communication system 1, a downlink shared channel (PDSCH (Physical Downlink Shared CHannel)), which is used by each user terminal 20 on a shared basis, a broadcast channel (PBCH (Physical Broadcast CHannel)), downlink L1/L2 control channels and so on are used as downlink channels. User data, higher layer control information and SIBs (System Information Blocks) are transmitted in the PDSCH. Further, a master information block (MIB) is transmitted by PBCH.

The downlink L1/L2 control channels include a PDCCH (Physical Downlink Control CHannel), an EPDCCH (Enhanced Physical Downlink Control CHannel), a PCFICH (Physical Control Format Indicator CHannel), a PHICH (Physical Hybrid-ARQ Indicator CHannel) and so on. Downlink control information (DCI), including PDSCH and/or PUSCH scheduling information, and so on, is communicated by the PDCCH.

Note that DCI that schedules receipt of DL data may also be referred to as "DL assignment," and DCI that schedules transmission of UL data may also be referred to as "UL grant."

The use of PCFICH can cause the number of OFDM symbols used for the PDCCH to be transmitted. The PHICH can cause hybrid automatic repeat request (HARQ) delivery acknowledgement information (e.g., such as retransmission control information, HARQ-ACK, and ACK/NACK) for the PUSCH to be transmitted. The EPDCCH is frequency-division-multiplexed with the PDSCH (downlink shared data channel) and used to communicate DCI and so on, like the PDCCH.

In the radio communication system 1, an uplink shared channel (PUSCH (Physical Uplink Shared CHannel)), which is used by each user terminal 20 on a shared basis, an uplink control channel (PUCCH (Physical Uplink Control CHannel)), a random access channel (PRACH (Physical Random Access CHannel)) and so on are used as uplink channels. User data, higher layer control information and so on are communicated by the PUSCH. Also, in the PUCCH, downlink radio quality information (CQI (Channel Quality Indicator)), delivery acknowledgement information, scheduling requests (SRs) and so on are communicated. By means of the PRACH, random access preambles for establishing connections with cells are transmitted.

In the radio communication systems 1, cell-specific reference signal (CRSs), channel state information reference signal (CSI-RSs), demodulation reference signal (DMRSs), positioning reference signal (PRSs) and so on are communicated as downlink reference signals. Also, in the radio communication system 1, measurement reference signals (Sounding Reference Signals (SRSs)), demodulation reference signals (DMRSs) and so on are communicated as uplink reference signals. Note that, DMRSs may be referred to as user terminal-specific reference signals (UE-specific Reference Signals). Also, the reference signals to be communicated are by no means limited to these.

<Base Station>

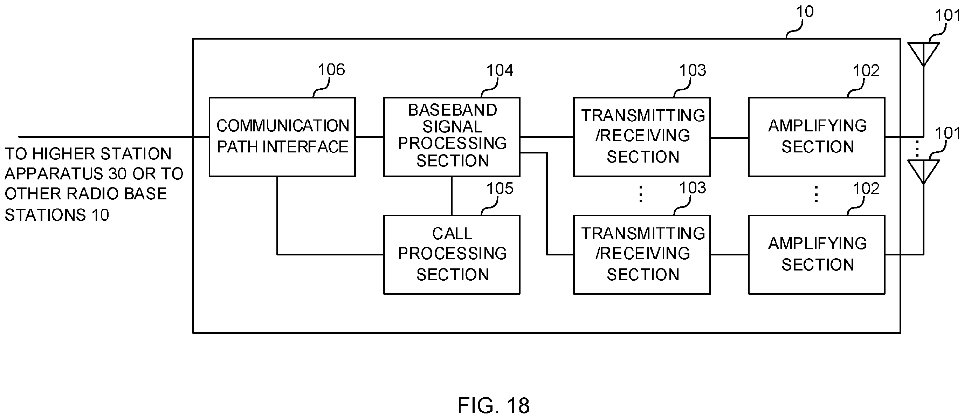

Fig. 18 is a view illustrating an example of an entire configuration of a base station according to the present embodiment. A base station 10 includes a plurality of transmitting/receiving antennas 101, amplifying sections 102, transmitting/receiving sections 103, a baseband signal processing section 104, a call processing section 105, and a communication path interface 106. Note that one or more transmitting/receiving antennas 101, amplifying sections 102 and transmitting/receiving sections 103 may be provided.

User data to be transmitted from the base station 10 to the user terminal 20 on the downlink is input from the higher station apparatus 30 to the baseband signal processing section 104, via the communication path interface 106.

In the baseband signal processing section 104, the user data is subjected to transmission processes, including a PDCP (Packet Data Convergence Protocol) layer process, division and coupling of the user data, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to each transmitting/receiving section 103. Furthermore, downlink control signals are also subjected to transmission processes such as channel coding and an inverse fast Fourier transform, and forwarded to the transmitting/receiving sections 103.

The transmitting/receiving section 103 converts a base band signal output from the baseband signal processing section 104 after being precoded in each antenna into a signal in a radio frequency band, and transmits the signal. A radio frequency signal subjected to the frequency conversion in each transmitting/receiving section 103 is amplified in the amplifying section 102, and transmitted from each transmitting/receiving antenna 101. The transmitting/receiving sections 103 can be constituted by a transmitter/receiver, a transmitting/receiving circuit or transmitting/receiving apparatus that can be described based on general understanding of the technical field to which the present disclosure pertains. Note that a transmitting/receiving section 103 may be structured as a transmitting/receiving section in one entity, or may be constituted by a transmitting section and a receiving section.

Meanwhile, as for uplink signals, radio frequency signals that are received in the transmitting/receiving antennas 101 are each amplified in the amplifying sections 102. The transmitting/receiving sections 103 receive the uplink signals amplified in the amplifying sections 102. The received signals are converted into the baseband signal through frequency conversion in the transmitting/receiving sections 103 and output to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing (such as setting up and releasing) of communication channels, manages the state of the base stations 10 and manages the radio resources.

The communication path interface 106 transmits and receives signals to and from the higher station apparatus 30 via a given interface. Also, the communication path interface 106 may transmit and receive signals (backhaul signaling) with other base stations 10 via an inter-base station interface (which is, for example, optical fiber that is in compliance with the CPRI (Common Public Radio Interface), the X2 interface, etc.).

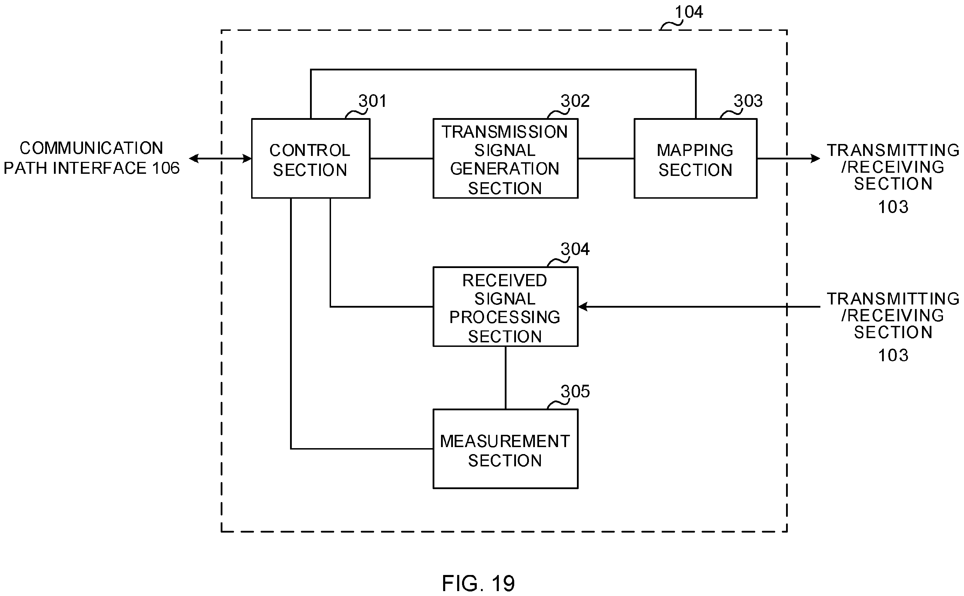

Fig. 19 is a view illustrating an example of a functional configuration of the base station according to the present embodiment. Note that, although this example will primarily show functional blocks that pertain to characteristic parts of the present embodiment, it may be assumed that the base station 10 has other functional blocks that are necessary for radio communication as well.

The baseband signal processing section 104 at least has a control section (scheduler) 301, a transmission signal generation section 302, a mapping section 303, a received signal processing section 304 and a measurement section 305. Note that these configurations have only to be included in the base station 10, and some or all of these configurations may not be included in the baseband signal processing section 104.

The control section (scheduler) 301 controls the whole of the base station 10. The control section 301 can be composed of a controller, a control circuit, or a control apparatus, which is described based on general understanding of the technical field to which the present disclosure pertains.

For example, the control section 301 controls the generation of signals in the transmission signal generation section 302, the allocation of signals in the mapping section 303, and the like. Moreover, the control section 301 controls the receiving processing for signals in the received signal processing section 304, measurement of signals in the measurement section 305, and the like.

The control section 301 controls the scheduling (for example, resource allocation) of system information, downlink data signals (for example, signals transmitted in the PDSCH), and downlink control signals (for example, signals that are transmitted in the PDCCH and/or the EPDCCH, such as delivery acknowledgement information). Scheduling (for example, resource allocation) of delivery confirmation information). The control section 301 controls the generation of downlink control signals, downlink data signals and so on, based on the results of deciding whether or not retransmission control is necessary for uplink data signals, and so on.

The control section 301 controls the scheduling of synchronization signals (for example, the PSS (Primary Synchronization Signal)/SSS (Secondary Synchronization Signal)), downlink reference signals (for example, the CRS, the CSI-RS, the DMRS, etc.) and so on.

The control section 301 controls the scheduling for uplink data signals (for example, signals transmitted in the PUSCH), uplink control signals (for example, signals that are transmitted in the PUCCH and/or the PUSCH, and delivery acknowledgement information), random access preambles (for example, signals transmitted in the PRACH), uplink reference signals, and the like.

The transmission signal generation section 302 generates downlink signals (downlink control signals, downlink data signals, downlink reference signals and so on) based on commands from the control section 301, and outputs these signals to the mapping section 303. The transmission signal generation section 302 can be constituted by a signal generator, a signal generating circuit or signal generation apparatus that can be described based on general understanding of the technical field to which the present disclosure pertains.

The transmission signal generation section 302, for example, generates DCI based on an instruction from the control section 301. The DCI is, for example, at least one of a DL assignment which reports downlink data allocation information, a UL grant which reports uplink data allocation information, DCI including SFI, or the like. Further, a downlink data signal is subjected to coding processing and modulation processing in accordance with a coding rate, a modulation scheme, or the like, determined based on channel state information (CSI) from each user terminal 20. Further, the downlink data signal may include information configured through higher layer signaling.

The mapping section 303 maps the downlink signals generated in the transmission signal generation section 302 to given radio resources based on commands from the control section 301, and outputs these to the transmitting/receiving sections 103. The mapping section 303 can be constituted by a mapper, a mapping circuit or mapping apparatus that can be described based on general understanding of the technical field to which the present disclosure pertains.

The received signal processing section 304 performs receiving processes (for example, demapping, demodulation, decoding and so on) of received signals that are input from the transmitting/receiving sections 103. Here, the received signals include, for example, uplink signals (uplink control signals, uplink data signals, uplink reference signals, etc.) that are transmitted from the user terminal 20. The received signal processing section 304 can be composed of a signal processor, a signal processing circuit, or a signal processing apparatus, which is described based on general understanding of the technical field to which the present disclosure pertains.

The received signal processing section 304 outputs, to the control section 301, information decoded by the receiving processing. For example, when a PUCCH to contain an HARQ-ACK is received, this HARQ-ACK is output to the control section 301. Also, the received signal processing section 304 outputs the received signals, the signals after the receiving processes and so on, to the measurement section 305.

The measurement section 305 conducts measurements with respect to the received signals. The measurement section 305 can be constituted by a measurer, a measurement circuit or measurement apparatus that can be described based on general understanding of the technical field to which the present disclosure pertains.

For example, the measurement section 305 may perform RRM (Radio Resource Management) measurements, CSI (Channel State Information) measurements and so on, based on the received signals. The measurement section 305 may measure the received power (for example, RSRP (Reference Signal Received Power)), the received quality (for example, RSRQ (Reference Signal Received Quality), SINR (Signal to Interference plus Noise Ratio), SNR (Signal to Noise Ratio), etc.), the signal strength (for example, RSSI (Received Signal Strength Indicator)), communication path information (for example, CSI), and so on. The measurement results may be output to the control section 301.

Note that the transmitting/receiving section 103 may transmit downlink control information (DCI). Further, the transmitting/receiving section 103 may receive an uplink channel (for example, at least one of the PUSCH or the PUCCH) which is repeatedly transmitted. Further, the transmitting/receiving section 103 may receive a demodulation reference signal of the uplink channel.

The transmitting/receiving section 103 may transmit configuration information (such as, for example, the number of repetitions and a PUCCH resource) regarding the repetitive transmission. The transmitting/receiving section 103 may transmit information regarding transmit diversity of an uplink channel.

The control section 301 may control configuration of at least one of the transmit diversity of the uplink channel or the repetitive transmission. Further, the control section 301 may control configuration of the demodulation reference signal of the uplink channel.

(user terminal)

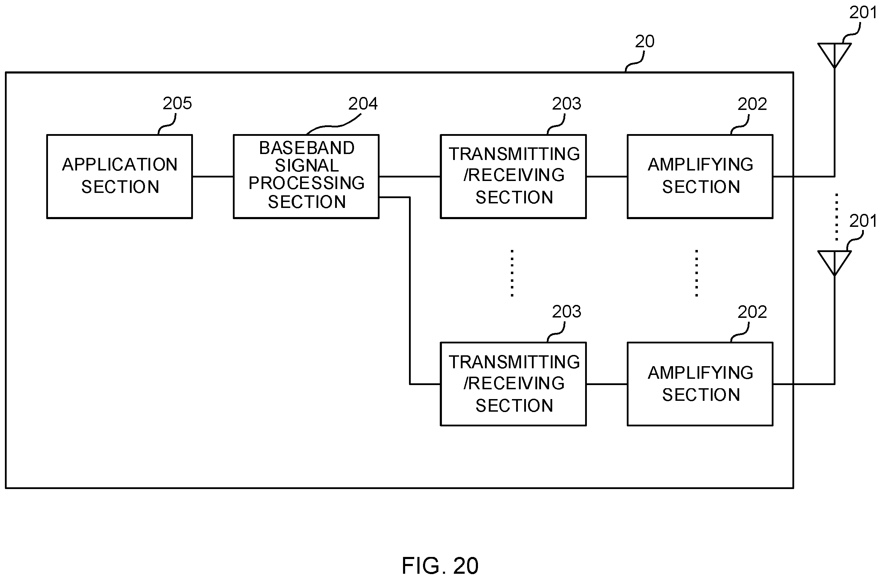

Fig. 20 is a diagram illustrating an exemplary overall structure of a user terminal according to the present embodiment. A user terminal 20 has a plurality of transmitting/receiving antennas 201, amplifying sections 202, transmitting/receiving sections 203, a baseband signal processing section 204 and an application section 205. Note that one or more transmitting/receiving antennas 201, amplifying sections 202 and transmitting/receiving sections 203 may be provided.

Radio frequency signals that are received in the transmitting/receiving antennas 201 are amplified in the amplifying sections 202. A transmitting/receiving section 203 receives a downlink signal amplified by the amplifying section 202. The transmitting/receiving section 203 performs frequency conversion for the received signal into base band signal, and outputs the base band signal to the baseband signal processing section 204. The transmitting/receiving section 203 can be constituted by a transmitter/receiver, a transmitting/receiving circuit or transmitting/receiving apparatus that can be described based on general understanding of the technical field to which the present disclosure pertains. Note that a transmitting/receiving section 203 may be structured as a transmitting/receiving section in one entity, or may be constituted by a transmitting section and a receiving section.

The baseband signal processing section 204 performs receiving processes for the baseband signal that is input, including an FFT process, error correction decoding, a retransmission control receiving process and so on. Downlink user data is forwarded to the application section 205. The application section 205 performs processes related to higher layers above the physical layer and the MAC layer and so on. Also, in the downlink data, the broadcast information can be also forwarded to the application section 205.

Meanwhile, uplink user data is input from the application section 205 to the baseband signal processing section 204. The baseband signal processing section 204 performs a retransmission control transmission process (for example, an HARQ transmission process), channel coding, precoding, a discrete Fourier transform (DFT) process, an IFFT process and so on, and the result is forwarded to the transmitting/receiving section 203.

Baseband signals that are output from the baseband signal processing section 204 are converted into a radio frequency band in the transmitting/receiving sections 203 and transmitted. The radio frequency signals having been subjected to frequency conversion in the transmitting/receiving sections 203 are amplified in the amplifying sections 202, and transmitted from the transmitting/receiving antennas 201.

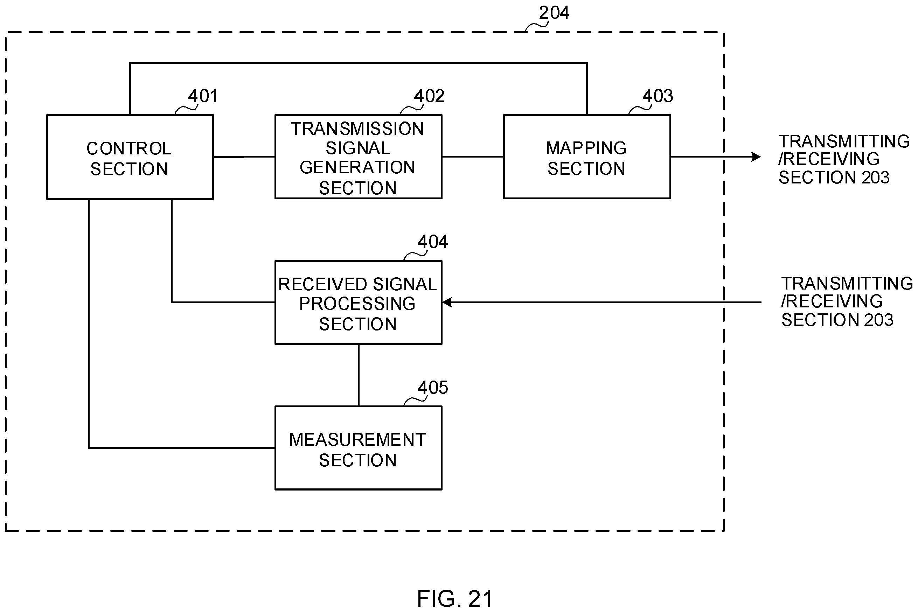

Fig. 21 is a diagram illustrating an exemplary functional structure of a user terminal according to the present embodiment. Note that, although this example will primarily show functional blocks that pertain to characteristic parts of the present embodiment, it may be assumed that the user terminal 20 has other functional blocks that are necessary for radio communication as well.

The baseband signal processing section 204 provided in the user terminal 20 at least has a control section 401, a transmission signal generation section 402, a mapping section 403, a received signal processing section 404 and a measurement section 405. Note that these configurations may be included in the user terminal 20, and some or all of the configurations need not be included in the baseband signal processing section 204.

The control section 401 controls the whole of the user terminal 20. The control section 401 can be composed of a controller, a control circuit, or a control apparatus, which is described based on general understanding of the technical field to which the present disclosure pertains.

For example, the control section 401 controls the generation of signals in the transmission signal generation section 402, the allocation of signals in the mapping section 403, and the like. Furthermore, the control section 401 controls the signal receiving processing in the received signal processing section 404, the measurements of signals in the measurement section 405 and so on.

The control section 401 acquires the downlink control signals and downlink data signals transmitted from the base station 10, via the received signal processing section 404. The control section 401 controls the generation of uplink control signals and/or uplink data signals based on the results of deciding whether or not retransmission control is necessary for the downlink control signals and/or downlink data signals, and so on.

Further, when the control section 401 acquires various information reported from the base station 10 from the received signal processing section 404, the control section 401 may update the parameter used for control based on the information.

The transmission signal generation section 402 generates uplink signals (uplink control signals, uplink data signals, uplink reference signals, etc.) based on commands from the control section 401, and outputs these signals to the mapping section 403. The transmission signal generation section 402 can be composed of a signal generator, a signal generating circuit, or a signal generating apparatus, which is described based on general understanding of the technical field to which the present disclosure pertains.

For example, the transmission signal generation section 402 generates uplink control signals such as delivery acknowledgement information, channel state information (CSI) and so on, based on commands from the control section 401. Also, the transmission signal generation section 402 generates uplink data signals based on instructions from the control section 401. For example, when a UL grant is included in a downlink control signal that is reported from the base station 10, the control section 401 instructs the transmission signal generation section 402 to generate an uplink data signal.

The mapping section 403 maps the uplink signals generated in the transmission signal generation section 402 to radio resources based on commands from the control section 401, and output the result to the transmitting/receiving section 203. The mapping section 403 can be constituted by a mapper, a mapping circuit or mapping apparatus that can be described based on general understanding of the technical field to which the present disclosure pertains.

The received signal processing section 404 performs receiving processes (for example, demapping, demodulation, decoding and so on) of received signals that are input from the transmitting/receiving sections 203. Here, the received signals include, for example, downlink signals (downlink control signals, downlink data signals, downlink reference signals and so on) that are transmitted from the base station 10. The received signal processing section 404 can be constituted by a signal processor, a signal processing circuit or signal processing apparatus that can be described based on general understanding of the technical field to which the present disclosure pertains. Also, the received signal processing section 404 can constitute the receiving section according to the present disclosure.

The received signal processing section 404 outputs the decoded information that is acquired by the receiving processes to the control section 401. The received signal processing section 404 outputs, for example, broadcast information, system information, RRC signaling, DCI, and so on, to the control section 401. Also, the received signal processing section 404 outputs the received signals and/or the signals after the receiving processes to the measurement section 405.

The measurement section 405 conducts measurements with respect to the received signals. The measurement section 405 can be constituted by a measurer, a measurement circuit or measurement apparatus that can be described based on general understanding of the technical field to which the present disclosure pertains.

For example, the measurement section 405 may perform RRM measurements, CSI measurements and so on based on the received signals. The measurement section 405 may measure the received power (for example, RSRP), the received quality (for example, RSRQ, SINR, and SNR), the signal strength (for example, RSSI), communication path information (for example, CSI), and so on. The measurement results may be output to the control section 401.

Note that the transmitting/receiving section 203 may receive downlink control information (DCI). Further, the transmitting/receiving section 203 may repeatedly transmit an uplink channel (for example, at least one of the PUSCH or the PUCCH). The transmitting/receiving section 203 may receive configuration information regarding the repetitive transmission (such as, for example, the number of repetitions and a PUCCH resource) through higher layer signaling.

Further, the transmitting/receiving section 203 may repeatedly transmit an uplink channel (for example, at least one of the PUSCH or the PUCCH). Further, the transmitting/receiving section 203 may transmit a demodulation reference signal of the uplink channel.

The transmitting/receiving section 203 may receive configuration information regarding the repetitive transmission (such as, for example, the number of repetitions and a PUCCH resource). The transmitting/receiving section 203 may receive information regarding transmit diversity of the uplink channel.

The control section 401 may control repetitive transmission of the uplink channel. Further, the control section 401 may control transmission processing (for example, at least one of transmission, mapping, coding or modulation) of the uplink channel using the transmit diversity. Further, the control section 401 may control transmission processing of demodulation reference signals (for example, at least one of transmission, mapping, coding or modulation) of the uplink channel using the transmit diversity.

Specifically, the control section 401 may control a maximum interval of the subcarrier pair to which the uplink channel and the demodulation reference signal of the uplink channel are mapped in a case where the transmit diversity using a single carrier space-frequency block code (SC-SFBC) is configured based on information regarding the transmit diversity. For example, the control section 401 may control the maximum interval based on whether or not repetitive transmission of the uplink channel is configured.

Further, the control section 401 may control the maximum interval based on the number of repetitions of the uplink channel in a case where the transmit diversity using the SC-SFBC is configured and repetitive transmission of the uplink channel is configured.

Further, the control section 401 may control the maximum interval to be smaller as the number of repetitions increases or may control the maximum interval to be larger as the number of repetitions increases.

Further, the control section 401 may control the maximum interval based on the number of resource blocks allocated to the uplink channel in a case where the transmit diversity using the SC-SFBC is configured and repetitive transmission of the uplink channel is not configured.

Further, the control section 401 may determine whether or not to control the maximum interval for the demodulation reference signal based on the number of repetitions of the uplink channel, based on the number of resource blocks allocated to the uplink channel in a case where the demodulation reference signal is mapped to subcarriers which are spaced at given intervals.

Further, the control section 401 may control mapping of the demodulation reference signal based on whether discrete Fourier transform-spread-orthogonal frequency division multiplexing (DFT-s-OFDM) is used to transmit the uplink channel or whether cyclic prefix-orthogonal frequency division multiplexing (CP-OFDM) is used to transmit the uplink channel in a case where a space-frequency block code (SFBC) is configured based on the information regarding the transmit diversity.

(Hardware Structure)

Note that the block diagrams that have been used to describe the above embodiment illustrate blocks in functional sections. These functional blocks (components) may be implemented in arbitrary combinations of at least one of hardware and software. Also, the method for implementing each functional block is not particularly limited. That is, each functional block may be realized by one piece of apparatus that is physically or logically aggregated, or may be realized by directly or indirectly connecting two or more physically or logically separate pieces of apparatus (via wire or wireless, for example) and using a plurality of pieces of these apparatus. The functional block may be realized by combining the one device or the plurality of devices with software.

Here, the function include, but is not limited to, deciding, determining, judging, calculating, computing, processing, deriving, investigating, searching, ascertaining, receiving, transmitting, outputting, accessing, solving, selecting, choosing, establishing, comparing, assuming, expecting, deeming, broadcasting, notifying, communicating, forwarding, configuring, reconfiguring, allocating, mapping, and assigning. For example, a functional block (configuration section) that causes transmission to function may be referred to as a transmitting section, transmitter, or the like. In any case, as described above, the implementation method is not particularly limited.

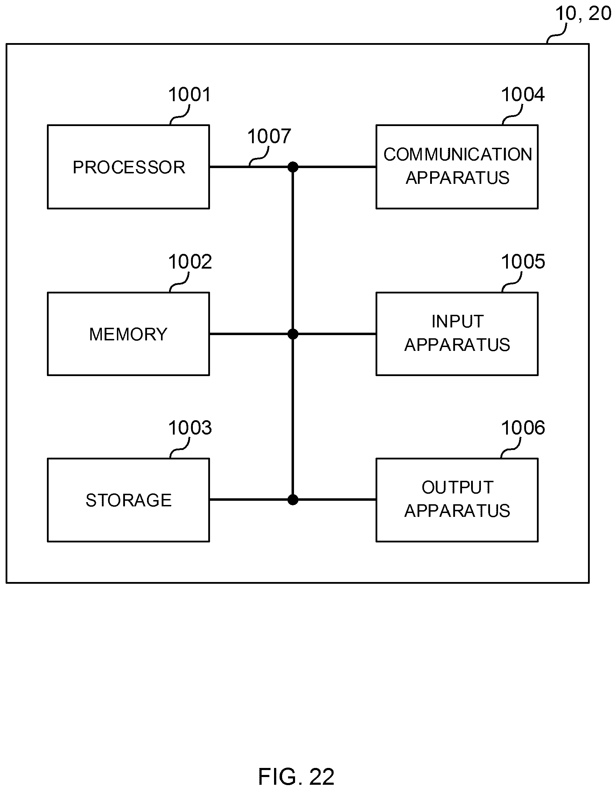

For example, the base station, user terminal and so on according to the present disclosure may function as a computer that executes the processes of the radio communication method of the present disclosure. Fig. 22 is a diagram illustrating an exemplary hardware structure of a base station and a user terminal according to present embodiment. Physically, the above-described base station 10 and user terminal 20 may be formed as a computer apparatus that includes a processor 1001, a memory 1002, a storage 1003, a communication apparatus 1004, an input apparatus 1005, an output apparatus 1006 and a bus 1007.

Note that, in the following description, the word "apparatus" may be replaced by "circuit," "device," "unit" and so on. The hardware structure of the base station 10 and the user terminal 20 may be designed to include one or a plurality of apparatuses shown in the drawings, or may be designed not to include some apparatuses.

For example, although only one processor 1001 is shown, a plurality of processors may be provided. Furthermore, processes may be implemented with one processor, or processes may be implemented in sequence, or in different manners, on two or more processors. Note that the processor 1001 may be implemented with one or more chips.

Each function of the base station 10 and the user terminal 20 is implemented by reading given software (program) on hardware such as the processor 1001 and the memory 1002, and by controlling the operation in the processor 1001, the communication in the communication apparatus 1004, and at least one of the reading and writing of data in the memory 1002 and the storage 1003.

The processor 1001 may control the whole computer by, for example, running an operating system. The processor 1001 can be configured with a central processing unit (CPU) including an interface with a peripheral equipment, a control device, a computing device, a register, and the like. For example, the above-described baseband signal processing section 104 (204), call processing section 105 and so on may be implemented by the processor 1001.

Furthermore, the processor 1001 reads programs (program codes), software modules or data, from at least one of the storage 1003 and the communication apparatus 1004, into the memory 1002, and executes various processes according to these. As for the programs, programs to allow computers to execute at least some of the operations described in the above embodiment may be used. For example, the control section 401 of the user terminal 20 may be implemented by control programs that are stored in the memory 1002 and that operate on the processor 1001, and other functional blocks may be implemented likewise.

The memory 1002 is a computer-readable recording medium, and may be constituted by, for example, at least one of a ROM (Read Only Memory), an EPROM (Erasable Programmable ROM), an EEPROM (Electrically EPROM), a RAM (Random Access Memory) and/or other appropriate storage media. The memory 1002 may be referred to as "register," "cache," "main memory (primary storage apparatus)," or the like. The memory 1002 can store executable programs (program codes), software modules, and the like for implementing the radio communication method according to an embodiment of the present disclosure.

The storage 1003 is a computer-readable recording medium, and may be constituted by, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, a key drive, etc.), a magnetic stripe, a database, a server, and/or other appropriate storage media. The storage 1003 may be referred to as "secondary storage apparatus."

The communication apparatus 1004 is hardware (transmitting/receiving device) for allowing inter-computer communication by using at least one of wired network and wireless network, and may be referred to as, for example, a network device, a network controller, a network card, a communication module and so on. The communication apparatus 1004 may be configured to include a high frequency switch, a duplexer, a filter, a frequency synthesizer and so on in order to implement, for example, at least one of frequency division duplex (FDD) and time division duplex (TDD). For example, the above-mentioned transmitting/receiving antennas 101 (201), amplifying section 102 (202), transmitting/receiving sections 103 (203), communication path interface 106, and the like may be realized by the communication apparatus 1004. The transmitting/receiving section 103 may be implemented by physically or logically separating a transmitting section 103a and a receiving section 103b.

The input apparatus 1005 is an input device for receiving input from the outside (for example, a keyboard, a mouse, a microphone, a switch, a button, a sensor and so on). The output apparatus 1006 is an output device for allowing output to the outside (for example, a display, a speaker, an LED (Light Emitting Diode) lamp, and so on). Note that the input apparatus 1005 and the output apparatus 1006 may be provided in an integrated structure (for example, a touch panel).

Furthermore, these pieces of apparatus, including the processor 1001, the memory 1002 and so on are connected by the bus 1007 so as to communicate information. The bus 1007 may be formed with a single bus, or may be formed with buses that vary between pieces of apparatus.

Also, the base station 10 and the user terminal 20 may be structured to include hardware such as a microprocessor, a digital signal processor (DSP), an ASIC (Application-Specific Integrated Circuit), a PLD (Programmable Logic Device), an FPGA (Field Programmable Gate Array) and so on, and part or all of the functional blocks may be implemented by the hardware. For example, the processor 1001 may be implemented with at least one of these pieces of hardware.

(Variations)

Note that the terminology described in the present disclosure and the terminology that is needed to understand the present disclosure may be replaced with other terms that convey the same or similar meanings. For example, at least one of channels and symbols may be replaced by signals (signaling). The signal may also be a message. A reference signal may be abbreviated as an RS, and may be referred to as a pilot, a pilot signal, and so on, depending on which standard applies. Furthermore, a "component carrier (CC)" may be referred to as a "cell," a "frequency carrier," a "carrier frequency" and so on.

A radio frame may be comprised of one or a plurality of periods (frames) in a time domain. Each of one or a plurality of periods (frames) constituting a radio frame may be referred to as a subframe. Furthermore, a subframe may be comprised of one or a plurality of slots in the time domain. A subframe may be a fixed time duration (for example, 1 ms) not dependent on the numerology.

Here, the numerology may be a communication parameter used for at least one of transmission and reception of a certain signal or channel. For example, the numerology may indicate at least one of SubCarrier Spacing (SCS), a bandwidth, a symbol length, a cyclic prefix length, a transmission time interval (TTI), the number of symbols per TTI, a radio frame structure, specific filtering processing to be performed by a transceiver in the frequency domain, specific windowing processing to be performed by a transceiver in the time domain and so on.

A slot may be comprised of one or a plurality of symbols in the time domain (OFDM (Orthogonal Frequency Division multiplexing) symbols, SC-FDMA (Single Carrier Frequency Division Multiple Access) symbols, and so on). Also, a slot may be a time unit based on numerology.

The slot may include a plurality of mini slots. Each mini slot may be comprised of one or a plurality of symbols in the time domain. Also, a mini slot may be referred to as a subslot. Each mini slot may be comprised of fewer symbols than a slot. A PDSCH (or PUSCH) transmitted in a time unit larger than a mini slot may be referred to as PDSCH (PUSCH) mapping type A. PDSCH (or PUSCH) transmitted using the mini slots may be referred to as "PDSCH (PUSCH) mapping type B."

A radio frame, a subframe, a slot, a minislot and a symbol all represent the time unit in signal communication. A radio frame, a subframe, a slot, a mini slot and a symbol may be each called by other applicable names. Note that time units such as a frame, a subframe, a slot, a mini slot, and a symbol in the present disclosure may be replaced with each other.

For example, one subframe may be referred to as a "transmission time interval (TTI)," or a plurality of consecutive subframes may be referred to as a "TTI," or one slot or mini-slot may be referred to as a "TTI." That is, at least one of a subframe and a TTI may be a subframe (1 ms) in the existing LTE, may be a shorter period than 1 ms (for example, one to thirteen symbols), or may be a longer period of time than 1 ms. Note that the unit to represent the TTI may be referred to as a "slot," a "mini slot" and so on, instead of a "subframe."

Here, a TTI refers to the minimum time unit of scheduling in radio communication, for example. For example, in LTE systems, the base station schedules the radio resources (such as the frequency bandwidth and transmission power that can be used in each user terminal) to allocate to each user terminal in TTI units. Note that the definition of TTIs is not limited to this.

The TTI may be a transmission time unit such as a channel-encoded data packet (transport block), a code block, and a codeword, or may be a processing section such as scheduling and link adaptation. Note that, when a TTI is given, the period of time (for example, the number of symbols) in which transport blocks, code blocks, codewords and so on are actually mapped may be shorter than the TTI.

Note that, when one slot or one minislot is referred to as a "TTI," one or more TTIs (that is, one or multiple slots or one or more minislots) may be the minimum time unit of scheduling. Also, the number of slots (the number of minislots) to constitute this minimum time unit of scheduling may be controlled.

A TTI having a time length of 1 ms may be referred to as, for example, a usual TTI (TTI in LTE Rel. 8 to 12), a normal TTI, a long TTI, a usual subframe, a normal subframe, a long subframe, and a slot. A TTI that is shorter than a normal TTI may also be referred to as a shortened TTI, a short TTI, a partial TTI (or a fractional TTI), a shortened subframe, a short subframe, a mini slot, a sub-slot, a slot and so on.

Note that a long TTI (for example, a normal TTI, a subframe, etc.) may be replaced with a TTI having a time duration exceeding 1 ms, and a short TTI (for example, a shortened TTI) may be replaced with a TTI having a TTI duration less than the TTI duration of a long TTI and not less than 1 ms.

A resource block (RB) is the unit of resource allocation in the time domain and the frequency domain, and may include one or a plurality of consecutive subcarriers in the frequency domain. The number of subcarriers included in the RB may be the same regardless of the numerology, and may be 12, for example. The number of subcarriers included in the RB may be determined based on numerology.

Also, an RB may include one or more symbols in the time domain, and may be one slot, one minislot, one subframe or one TTI in length. One TTI, one subframe, and the like each may be comprised of one or a plurality of resource blocks.

Note that one or more RBs may be referred to as a "physical resource block (PRB (Physical RB))," a "subcarrier group (SCG)," a "resource element group (REG)," a "PRB pair," an "RB pair" and so on.

Furthermore, a resource block may be comprised of one or more resource elements (REs). For example, one RE may be a radio resource field of one subcarrier and one symbol.

The Bandwidth Part (BWP) (which may be called partial bandwidth etc.) may represent a subset of consecutive common RB (common resource blocks) for a certain numerology in a certain carrier. Here, the common RB may be specified by the index of the RB based on a common reference point of the carrier. The PRB may be defined in a BWP and numbered within that BWP.

The BWP may include a BWP for UL (UL BWP) and a BWP for DL (DL BWP). For the UE, one or a plurality of BWPs may be configured within one carrier.

At least one of the configured BWPs may be active, and it does not have to be assumed that the UE transmits or receives a given signal/channel outside the active BWP. Note that "cell", "carrier", and the like in the present disclosure may be read as "BWP".

Note that the structures of radio frames, subframes, slots, minislots, symbols and so on described above are merely examples. For example, configurations pertaining to the number of subframes included in a radio frame, the number of slots included in a subframe, the number of minislots included in a slot, the number of symbols and RBs included in a slot or a mini-slot, the number of subcarriers included in an RB, the number of symbols in a TTI, the symbol duration, the length of cyclic prefixes (CPs) and so on can be variously changed.

Also, the information and parameters described in the present disclosure may be represented in absolute values or in relative values with respect to given values, or may be represented using other applicable information. For example, a radio resource may be specified by a given index.

Names used for, for example, parameters in the present disclosure are in no respect limitative. In addition, an equation and so on using these parameters may differ from those explicitly disclosed in the present disclosure. Since various channels (PUCCH (Physical Uplink Control CHannel), PDCCH (Physical Downlink Control CHannel) and so on) and information elements can be identified by any suitable names, the various names assigned to these individual channels and information elements are in no respect limiting.

For example, the information and signals described in the present disclosure may be represented by using any of various different techniques. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Further, information, signals, and the like can be output in at least one of a direction from higher layers to lower layers and a direction from lower layers to higher layers. Information, signals and so on may be input and output via a plurality of network nodes.

The information, signals and so on that are input and/or output may be stored in a specific location (for example, in a memory), or may be managed in a control table. The information, signals, and so on that are input and/or output can be overwritten, updated, or appended. The information, signals, and so on that are output may be deleted. The information, signals and so on that are input may be transmitted to other pieces of apparatus.

Reporting of information is by no means limited to the aspects/embodiment described in the present disclosure, and other methods may be used as well. For example, reporting of information may be implemented by using physical layer signaling (for example, downlink control information (DCI), uplink control information (UCI), higher layer signaling (for example, RRC (Radio Resource Control) signaling, broadcast information (the master information block (MIB), system information blocks (SIBs) and so on), MAC (Medium Access Control) signaling and so on), and other signals and/or combinations of these.

Note that physical layer signaling may be referred to as "L1/L2 (Layer 1/Layer 2) control information (L1/L2 control signals)," "L1 control information (L1 control signal)" and so on. Also, RRC signaling may be referred to as RRC messages, and can be, for example, an RRC connection setup message, RRC connection reconfiguration message, and so on. Also, MAC signaling may be reported using, for example, MAC control elements (MAC CEs (Control Elements)).

Also, reporting of given information (for example, reporting of information to the effect that "X holds") does not necessarily have to be sent explicitly, and can be sent implicitly (for example, by not reporting this piece of information, by reporting another piece of information, and so on).

Decisions may be made in values represented by one bit (0 or 1), may be made in Boolean values that represent true or false, or may be made by comparing numerical values (for example, comparison against a given value).

Software, whether referred to as "software," "firmware," "middleware," "microcode" or "hardware description language," or called by other names, should be interpreted broadly, to mean instructions, instruction sets, code, code segments, program codes, programs, subprograms, software modules, applications, software applications, software packages, routines, subroutines, objects, executable files, execution threads, procedures, functions and so on.

Also, software, commands, information and so on may be transmitted and received via communication media. For example, when a software is transmitted from a website, a server, or some other remote source by using at least one of a wired technology (coaxial cable, optical fiber cable, twisted pair, Digital Subscriber Line (DSL), or the like) and a wireless technology (infrared light, microwave, or the like), then at least one of these wired and wireless technologies is included within the definition of the transmission medium.

The terms "system" and "network" used in the present disclosure can be used interchangeably.

In the present disclosure, the terms such as "precoding", "precoder", "weight (precoding weight)", "quasi-co-location (QCL)", "transmission configuration indication state (TCI state)", "spatial relation", "spatial domain filter", "transmit power", "phase rotation", "antenna port", "antenna port group", "layer", "number of layers", "rank", "beam", "beam width", "beam angle", "antenna", "antenna element", and "panel" may be used interchangeably.

In the present disclosure, the terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier," may be used interchangeably. The base station may be referred by a term such as a macro cell, a small cell, a femto cell, and a pico cell.

A base station can accommodate one or a plurality of (for example, three) cells. When a base station accommodates a plurality of cells, the entire coverage area of the base station can be partitioned into a plurality of smaller areas, and each smaller area can provide communication services through base station subsystems (for example, indoor small base stations (Remote Radio Heads (RRHs))). The term "cell" or "sector" refers to a part or all of the coverage area of at least one of a base station and/or a base station subsystem that performs communication service in this coverage.

In the present disclosure, the terms "mobile station (MS)", "user terminal", "user equipment (UE)", "terminal" and the like can be used interchangeably.

A mobile station may be referred to as a subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client or some other suitable terms.

At least one of a base station and a mobile station may be referred to as transmitting apparatus, receiving apparatus, communication apparatus and so on. Note that at least one of the base station and the mobile station may be a device mounted on a mobility unit, a mobility unit itself, or the like. The mobility unit may be a vehicle (such as a car, an airplane, for example), an unmanned mobility unit (such as a drone, an autonomous vehicle, for example), or a robot (manned or unmanned). Note that at least one of a base station and a mobile station includes apparatus that does not necessarily move during a communication operation. For example, at least one of the base station and the mobile station may be an IoT (Internet of Things) apparatus, such as a sensor.

Furthermore, the base stations in the present disclosure may be replaced by user terminal. For example, each aspect/embodiment of the present disclosure may be applied to a configuration acquired by replacing communication between a base station and a user terminal with communication among a plurality of user terminal (for example, may be referred to as Device-to-Device (D2D), Vehicle-to-Everything (V2X), or the like) or the like. In the case, a configuration in which the user terminal 20 has the function of the above-described base station 10 may be adopted. Words such as "uplink" and "downlink" may also be replaced with wording corresponding to inter-terminal communication (for example, "side"). For example, the uplink channel, the downlink channel, or the like may be read as a side channel.

Similarly, a user terminal in the present disclosure may be replaced with a base station. In the case, a configuration in which the base station 10 has the function of the above-described user terminal 20 may be adopted.

In the present disclosure, an operation performed by a base station may be performed by an upper node thereof in some cases. In a network comprised of one or more network nodes with base stations, it is clear that various operations that are performed so as to communicate with terminals can be performed by base stations, one or more network nodes (for example, MMEs (Mobility Management Entities), S-GWs (Serving-Gateways) and so on may be possible, but these are not limiting) other than base stations, or combinations of these.

The aspects/embodiment described in the present disclosure may be used individually or in combinations, which may be switched depending on the mode of implementation. Further, the order of processes, sequences, flowcharts and so on that have been used to describe the aspects/embodiments herein may be re-ordered as long as inconsistencies do not arise. For example, although various methods have been illustrated in the present disclosure with various components of steps using exemplary orders, the specific orders that are illustrated herein are by no means limiting.

The aspects/embodiment described in the present disclosure may be applied to LTE (Long Term Evolution), LTE-A (LTE-Advanced), LTE-B (LTE-Beyond, SUPER 3G, IMT-Advanced, 4G (4th generation mobile communication system), 5G (5th generation mobile communication system), FRA (Future Radio Access), New-RAT (Radio Access Technology), NR (New Radio), NX (New Radio Access), FX (Future generation radio access), GSM (Global System for Mobile Communications) (registered trademark), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), systems that use other appropriate radio communication systems, next-generation systems that are enhanced based on these, and the like. Further, a plurality of systems may be combined and applied (for example, a combination of LTE or LTE-A and 5G).

The description "based on" used in the present disclosure does not mean "based only on", unless otherwise stipulated. In other words, the phrase "based on" means both "based only on" and "based at least on."

Any reference to an element using a designation such as "first", "second", and the like used in the present disclosure generally does not limit the amount or order of those elements. These designations are used in the present disclosure only for convenience, as a method for distinguishing between two or more elements. In this way, reference to the first and second elements does not imply that only two elements may be employed, or that the first element must precede the second element in some way.

The term "deciding (determining)" used in the present disclosure may encompass a wide variety of operations. For example, "determining" may be regarded as judging, calculating, computing, processing, deriving, investigating, looking up, search, inquiry (for example, looking up in a table, database, or another data structure), ascertaining, and the like.

Furthermore, to "judge" and "determine" as used herein may be interpreted to mean making judgements and determinations related to receiving (for example, receiving information), transmitting (for example, transmitting information), inputting, outputting, accessing (for example, accessing data in a memory) and so on.

In addition, to "judge" and "determine" as used herein may be interpreted to mean making judgements and determinations related to resolving, selecting, choosing, establishing, comparing and so on. In other words, to "judge" and "determine" as used herein may be interpreted to mean making judgements and determinations related to some action.

"Judging" and "determining" may be read as "assuming", "expecting", "considering", or the like.

The "maximum transmission power" described in the present disclosure may mean a maximum value of transmission power, nominal UE maximum transmit power, or rated UE maximum transmit power.

As used in the present disclosure, the terms "connected" and "coupled," or any variation of these terms, mean all direct or indirect connections or coupling between two or more elements, and may include the presence of one or more intermediate elements between two elements that are "connected" or "coupled" to each other. The coupling or connection between the elements may be physical, logical, or a combination of these. For example, "connection" may be replaced by "access".

As used in the present disclosure, when two elements are connected, these elements may be considered to be "connected" or "coupled" to each other by using one or more electrical wires, cables, printed electrical connections, and the like, and, as some non-limiting and non-inclusive examples, by using electromagnetic energy and the like having wavelengths in the radio frequency, microwave, and optical (both visible and invisible) domains.

In the present disclosure, the phrase "A and B are different" may mean "A and B are different from each other." It should be noted that the term may mean "A and B are each different from C". Terms such as "leave", "coupled", or the like may also be interpreted in the same manner as "different".

When the terms such as "include," "including", and variations of these are used in the present disclosure, these terms are intended to be inclusive, in a manner similar to the way the term "comprising" is used. Furthermore, the term "or" as used in the present disclosure is intended not to be an exclusive-OR.

In the present disclosure, where translations add articles, such as a, an, and the in English, the present disclosure may include that the noun that follows these articles is in the plural.

Now, although the invention according to the present disclosure has been described in detail above, it should be obvious to a person skilled in the art that the invention according to the present disclosure is by no means limited to the embodiment described in the present disclosure. The invention according to the present disclosure can be implemented with various corrections and in various modifications, without departing from the spirit and scope of the invention defined by the recitations of claims. Consequently, the description in the present disclosure is provided only for the purpose of explaining examples, and should by no means be construed to limit the invention according to the present disclosure in any way.

**Claims**

1. A user terminal comprising:

   a receiving section that receives information regarding transmit diversity of an uplink channel; and
   a control section that controls, when the transmit diversity using a single carrier space-frequency block code (SC-SFBC) is configured based on the information, a maximum interval of a pair of subcarriers to which the uplink channel and a demodulation reference signal of the uplink channel are mapped.

2. The user terminal according to claim 1, wherein the control section controls, when the transmit diversity using the SC-SFBC is configured and repetitive transmission of the uplink channel is configured, the maximum interval based on a number of repetitions of the uplink channel.

3. The user terminal according to claim 2, wherein the control section controls the maximum interval to be smaller as the number of repetitions increases or controls the maximum interval to be greater as the number of repetitions increases.

4. The user terminal according to claim 1, wherein the control section controls, when the transmit diversity using the SC-SFBC is configured and repetitive transmission of the uplink channel is not configured, the maximum interval based on a number of resource blocks allocated to the uplink channel.

5. The user terminal according to any one of claims 1 to 4, wherein the control section determines whether or not to control the maximum interval for the demodulation reference signal based on the number of repetitions of the uplink channel, based on the number of resource blocks allocated to the uplink channel, when the demodulation reference signal is mapped to subcarriers which are spaced at given intervals.

6. The user terminal according to any one of claims 1 to 5, wherein the control section controls, when a space-frequency block code (SFBC) is configured based on the information, mapping of the demodulation reference signal based on whether any of discrete Fourier transform-spread-orthogonal frequency division multiplexing (DFT-s-OFDM) or cyclic prefix-orthogonal frequency division multiplexing (CP-OFDM) is used to transmit the uplink channel.

$x_0$

$x_1$

$\vdots$

$x_{M-1}$

DFT
(SIZE M)

$S_0$

$S_1$

$\vdots$

$S_{M-1}$

SC-SFBC
ENCODER

SYMBOL PAIR     SYMBOL PAIR

$s_0, s_1, \cdots, s_{p-2}, s_{p-1}, s_p, s_{p+1}, \cdots, s_{M-2}, s_{M-1},$

INSERT ZERO
SUBCARRIER MAPPING
IDFT
INSERT CP

Tx1

SYMBOL PAIR     SYMBOL PAIR

$-s^*_{p-1}, s^*_{p-2}, \cdots, -s^*_1, s^*_0, -s^*_{M-1}, s^*_{M-2}, \cdots, -s^*_{p+1}, s^*_p$

INSERT ZERO
SUBCARRIER MAPPING
IDFT
INSERT CP

Tx2

FIG. 1

FIG. 2

FIG. 3

FIG. 4

FIG. 5

SUBCARRIER

SLOT
#0

K=8

#1  #2  #3  #4  #5  #6  #7  #8  #9

#M-1

TRANSMISSION BANDWIDTH M

#M-12

#11

1PRB

#0

Rep=1 (RV=0) | Rep=2 (RV=2) | Rep=3 (RV=3) | Rep=4 (RV=1) | Rep=5 (RV=0) | Rep=6 (RV=2) | Rep=7 (RV=3) | Rep=8 (RV=1)

1 DATA SYMBOL

TIME

TRANSMISSION BANDWIDTH M

P=M/4

P=M/4

P=M/4

P=M/4

SYMBOL PAIR

$S_{M-1}$ #M-1
$S_{M-2}$ #M-2
$S_{3p+1}$ #3p+1
$S_{3p}$ #3p
$S_{3p-1}$ #3p-1
$S_{3p-2}$ #3p-2
$S_{2p+1}$ #2p+1
$S_{2p}$ #2p
$S_{2p-1}$ #2p-1
$S_{2p-2}$ #2p-2
$S_{p+1}$ #p+1
$S_p$ #p
$S_{p-1}$ #p-1
$S_{p-2}$ #p-2
$S_1$ #1
$S_0$ #0

Tx1

$S_{3p}^*$
$-S_{3p+1}^*$
$S_{M-2}^*$
$-S_{M-1}^*$
$S_{2p}^*$
$-S_{2p+1}^*$
$S_{3p-2}^*$
$-S_{3p-1}^*$
$S_p^*$
$-S_{p+1}^*$
$S_{2p-2}^*$
$-S_{2p-1}^*$
$S_0^*$
$-S_1^*$
$S_{p-2}^*$
$-S_{p-1}^*$

Tx2

FIG. 6

30

| NUMBER OF REPETITIONS K | MAXIMUM INTERVAL p |
|---|---|
| 2 | M/2 |
| 4 | M/3 |
| 8 | M/4 |

FIG. 7

1 RADIO FRAME

SLOT #0 | #1 | #2 | #3 | #4 | #5 | #6 | #7 | #8 | #9

TRANSMISSION BANDWIDTH M =4PRB

2 SLOTS

TIME

1 RADIO FRAME

SLOT #0 | #1 | #2 | #3 | #4 | #5 | #6 | #7 | #8 | #9

TRANSMISSION BANDWIDTH M =2PRB

8 SLOTS

TIME

FIG. 8

| NUMBER OF REPETITIONS K | MAXIMUM INTERVAL p |
|:---:|:---:|
| 2 | M/4 |
| 4 | M/3 |
| 8 | M/2 |

FIG. 9

EP 3 832 923 A1

| NUMBER OF ALLOCATED PRBs $N_{PRB}$ | MAXIMUM INTERVAL p |
|---|---|
| $N_{PRB} < 5$ | $M/2$ |
| $5 \leqq N_{PRB} < 25$ | $M/4$ |
| $25 \leqq N_{PRB} < 50$ | $M/6$ |
| $50 \leqq N_{PRB}$ | $M/12$ |

FIG. 10

SLOT

SUBCARRIER #0 | #1 | #2 | #3 | #4 | #5 | #6 | #7 | #8 | #9

TRANSMISSION
BANDWIDTH
($N_{PRB}$=1PRB)

#11

Rep=1
(RV=0)

Rep=2
(RV=2)

#0

1DMRS SYMBOL

TIME

SUBCARRIER

TRANSMISSION BANDWIDTH
($N_{PRB}$=1PRB)

P=M-1

SYMBOL PAIR

| | |
|---|---|
| 0 | #11 |
| $S_{\frac{M}{2}-1}$ | #10 |
| 0 | #9 |
| $S_{\frac{M}{2}-2}$ | #8 |

⋮

| | |
|---|---|
| 0 | #3 |
| $S_1$ | #2 |
| 0 | #1 |
| $S_0$ | #0 |

Tx1

SYMBOL PAIR

| |
|---|
| 0 |
| $S_0^*$ |
| 0 |
| $-S_1^*$ |

⋮

| |
|---|
| 0 |
| $S_{\frac{M}{2}-2}^*$ |
| 0 |
| $-S_{\frac{M}{2}-1}^*$ |

Tx2

FIG. 11

EP 3 832 923 A1

SLOT
SUBCARRIER #0 #1 #2 #3 #4 #5 #6 #7 #8 #9

#M-1

Rep=1 (RV=0)  Rep=2 (RV=2)

#M-12

#11

1PRB

#0

1 DMRS SYMBOL

TIME

TRANSMISSION BANDWIDTH M

SUBCARRIER

TRANSMISSION BANDWIDTH M

P=M/2

SYMBOL PAIR

| | |
|---|---|
| 0 | #M-1 |
| $s_{\frac{M}{2}-1}$ | #M-2 |
| 0 | |
| $s_{\frac{M}{2}-2}$ | |

0

$-s^*_{\frac{M}{2}+1}$

P=M/2

SYMBOL PAIR

| | |
|---|---|
| 0 | #p-1 |
| $s_{\frac{p}{2}-1}$ | #p-2 |
| 0 | |
| $s_{\frac{p}{2}-2}$ | |

| | |
|---|---|
| 0 | #3 |
| $S_1$ | #2 |
| 0 | #1 |
| $S_0$ | #0 |

SYMBOL PAIR

0

$s^*_{\frac{p}{2}-1}$

0

$-s^*_{\frac{p}{2}+1}$

0

$S^*_0$

0

$-S^*_1$

SYMBOL PAIR

0

$s^*_{\frac{p}{2}-2}$

0

$-s^*_{\frac{p}{2}-1}$

Tx1

Tx2

FIG. 12

| NUMBER OF ALLOCATED PRBs $N_{PRB}$ | MAXIMUM INTERVAL p |
|---|---|
| $N_{PRB}=1$ | M-1 |
| $2 \leqq N_{PRB} < 5$ | M/2 |
| $5 \leqq N_{PRB} < 25$ | M/4 |
| $25 \leqq N_{PRB} < 50$ | M/6 |
| $50 \leqq N_{PRB}$ | M/12 |

FIG. 13

EP 3 832 923 A1

FIG. 14

FIG. 15A

FIG. 15B

FIG. 16A

FIG. 16B

SUBCARRIER #11 #10 #9 #8 #7 #6 #5 #4 #3 #2 #1 #0

1PRB

SYMBOL #0 #1 #2 #3 #4 #5 #6 #7 #8 #9 #10 #11 #12 #13

SUBCARRIER PAIR

PUSCH

DMRS

RE WHICH IS NOT USED

FIG. 17

10

101

101

COMMUNICATION
PATH INTERFACE
106

BASEBAND
SIGNAL
PROCESSING
SECTION
104

TRANSMITTING
/RECEIVING
SECTION
103

AMPLIFYING
SECTION
102

TO HIGHER STATION
APPARATUS 30 OR TO
OTHER RADIO BASE
STATIONS 10

CALL
PROCESSING
SECTION
105

TRANSMITTING
/RECEIVING
SECTION
103

AMPLIFYING
SECTION
102

FIG. 18

FIG. 19

FIG. 20

FIG. 21

EP 3 832 923 A1

10, 20

1001

PROCESSOR

1007

COMMUNICATION
APPARATUS

1004

1002

MEMORY

INPUT
APPARATUS

1005

1003

STORAGE

OUTPUT
APPARATUS

1006

FIG. 22

## INTERNATIONAL SEARCH REPORT

| International application No. |
| --- |
| PCT/JP2018/029305 |

| A. CLASSIFICATION OF SUBJECT MATTER |
| --- |
| Int. Cl. H04L1/06(2006.01)i, H04L27/26(2006.01)i |
| According to International Patent Classification (IPC) or to both national classification and IPC |

| B. FIELDS SEARCHED |
| --- |
| Minimum documentation searched (classification system followed by classification symbols)<br>Int. Cl. H04L1/06, H04L27/26 |
| Documentation searched other than minimum documentation to the extent that such documents are included in the fields searched<br>Published examined utility model applications of Japan    1922-1996<br>Published unexamined utility model applications of Japan    1971-2018<br>Registered utility model specifications of Japan    1996-2018<br>Published registered utility model applications of Japan    1994-2018 |
| Electronic data base consulted during the international search (name of data base and, where practicable, search terms used)<br>IEEE Xplore |

| C. DOCUMENTS CONSIDERED TO BE RELEVANT | | |
| --- | --- | --- |
| Category* | Citation of document, with indication, where appropriate, of the relevant passages | Relevant to claim No. |
| Y<br>A | JP 2010-154528 A (MITSUBISHI ELECTRIC R&D CENTRE EUROPE B.V.) 08 July 2010, paragraphs [0005], [0009]-[0022], [0059]-[0065], [0077]-[0091], [0294]-[0297], fig. 1a-5, 12 & US 2010/0150259 A1, paragraphs [0005], [0009]-[0016], [0070]-[0079], [0091]-[0105], [0292]-[0294], fig. 1a-5, 12 & EP 2197138 A1 & CN 101917258 A | 1<br>2-6 |
| Y<br>A | Huawei, HiSilicon, Diversity-based transmission for UL [online], 3GPP TSG RAN WG1 adhoc_NR_AH_1709 R1-1715717, 11 September 2017, [retrieved on: 09 October 2018], Internet <URL: http://www.3gpp.org/ftp/tsg_ran/WG1_RL1/TSGR1_AH/NR_AH_1709/Docs/R1-1715717.zip> | 1<br>2-6 |

☒ Further documents are listed in the continuation of Box C.     ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 10.10.2018 | 23.10.2018 |

| Name and mailing address of the ISA/<br>    Japan Patent Office<br>    3-4-3, Kasumigaseki, Chiyoda-ku,<br>    Tokyo 100-8915, Japan | Authorized officer |
| --- | --- |
| | Telephone No. |

Form PCT/ISA/210 (second sheet) (January 2015)

**INTERNATIONAL SEARCH REPORT**

| International application No. |
| --- |
| PCT/JP2018/029305 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2010-518767 A (MITSUBISHI ELECTRIC R&D CENTRE EUROPE B.V.) 27 May 2010 & JP 2010-518768 A & JP 2011-510519 A & US 2010/0014413 A1 & WO 2008/098667 A1 & EP 1959603 A1 & KR 10-2009-0115148 A & CN 101657987 A | 1-6 |
| A | Lianjun Deng, 川村輝雄, 田岡秀和, 佐和橋衛, 上りリンク DFT-Precoded OFDMA における開ループ型送信ダイバーシチの特性比較, 電子情報通信学会技術研究報告, 04 November 2010, vol. 110, no. 268, pp. 75-80 (DENG, Lianjun, KAWAMURA, Teruo, TAOKA, Hidekazu, SAWAHASHI, Mamoru. Performance Comparisons of Open-Loop Transmit Diversity Schemes for DFT-Precoded OFDMA in Uplink Frequency-Selective Fading Channels. IEICE Technical Report.) | 1-6 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0,* April 2010